(19) Europäisches Patentamt
European Patent Office
Office européen des brevets

(11) EP 4 372 839 A1

(12) EUROPEAN PATENT APPLICATION
published in accordance with Art. 153(4) EPC

(43) Date of publication:
**22.05.2024 Bulletin 2024/21**

(21) Application number: **22842175.6**

(22) Date of filing: **14.07.2022**

(51) International Patent Classification (IPC):
***H01M 4/139*** *(2010.01)* ***H01M 4/62*** *(2006.01)*

(52) Cooperative Patent Classification (CPC):
**H01M 4/139; H01M 4/62;** Y02E 60/10

(86) International application number:
**PCT/JP2022/027695**

(87) International publication number:
**WO 2023/286833 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021 JP 2021116718**

(71) Applicants:
- **artience Co., Ltd.**
**Tokyo 104-8377 (JP)**
- **TOYOCOLOR CO., LTD.**
**Tokyo, 104-8381 (JP)**

(72) Inventors:
- **AOTANI, Yu**
**Tokyo 104-8381 (JP)**
- **NONOYAMA, Yuma**
**Tokyo 104-8381 (JP)**
- **OKA, Naoto**
**Tokyo 104-8381 (JP)**
- **HIRABAYASHI, Honami**
**Tokyo 104-8381 (JP)**

(74) Representative: **Becker, Eberhard**
**Becker Kurig & Partner**
**Patentanwälte mbB**
**Bavariastraße 7**
**80336 München (DE)**

# (54) RESIN COMPOSITION FOR SECONDARY BATTERY ELECTRODES, METHOD FOR PRODUCING MIXTURE SLURRY FOR SECONDARY BATTERY ELECTRODES, METHOD FOR PRODUCING ELECTRODE FILM, AND METHOD FOR PRODUCING SECONDARY BATTERY

(57) Provided is a resin composition for secondary battery electrodes which contains carbon nanotubes, a dispersing agent, a fluororesin, and a dispersion medium and in which the product (X×Y) of the complex elastic modulus X(Pa) and the phase angle Y(°) at 25°C and 1 Hz obtained by dynamic viscoelastic measurement is 30 to 5,000.

EP 4 372 839 A1

## Description

[Technical Field]

The present invention relates to a resin composition for secondary battery electrodes, a method for producing a mixture slurry for secondary battery electrodes, a method for producing an electrode film, and a method for producing a secondary battery.

[Background Art]

With the spread of electric vehicles, and miniaturization, weight reduction and performance improvement of portable devices, there are demands to provide secondary batteries with high energy density and to increase the capacity of such secondary batteries. In view of this, non-aqueous electrolyte secondary batteries using a non-aqueous electrolytic solution, particularly, lithium ion secondary batteries, have come to be used in many devices because of their high energy density and high voltage.

An electrode of a secondary battery is produced by applying a mixture slurry containing a positive electrode active material or a negative electrode active material, a conductive material, a binder resin and the like to a current collector. When a conductive material dispersion solution in which a conductive material is dispersed in a dispersion medium is prepared, and an active material and a binder resin are added to the conductive material dispersion solution to produce a mixture slurry, the conductive material is made to be contained by being uniformly dispersed in the electrode film, and the conductivity of the electrode film can be improved. The conductive material dispersion solution can be commonly used for various mixture slurries, but the mixture slurry is produced by adjusting the type of active material, mixing proportions of respective components, and the like according to specifications of batteries or electrodes. Therefore, it is preferable that the dispersibility and fluidity be maintained even while the conductive material dispersion solution is stored before the active material is added. In addition, if a resin composition in which a binder resin is added to a conductive material dispersion solution can be stored, an operation of producing a mixture slurry can be simplified.

Carbon black, fullerene, graphene, fine carbon materials and the like are used as conductive materials. Particularly, carbon nanotubes, which are a type of fine carbon fibers, are often used. For example, when carbon nanotubes are added to a positive electrode, it is possible to improve conductivity of the electrode film and reduce the electrode resistance. In addition, when carbon nanotubes are added to a negative electrode, the cycle lifespan of lithium secondary batteries can be improved by reducing the electrode resistance, improving the load resistance of batteries, increasing the strength of the electrode, and improving expansion and contraction properties of the electrode. Among these, multi-walled carbon nanotubes having an outer diameter of several nm to several tens of nm are relatively inexpensive and put into practical use. When carbon nanotubes having a small average outer diameter and a large fiber length are used, a conductive network can be efficiently formed with a small amount of carbon nanotubes, and the capacity of secondary batteries can be increased. On the other hand, carbon nanotubes having these features have a strong cohesive force, which makes it difficult to further improve dispersibility in a carbon nanotube dispersion solution.

Patent Literature 1 discloses a conductive material dispersion solution containing a conductive material containing bundled carbon nanotubes, a dispersing agent such as hydrogenated nitrile butadiene rubber, and a dispersion medium, and having a phase angle of 3° to 18° at a frequency of 1 Hz, which is measured with a rheometer. In Patent Literature 1, a composition obtained by adding an active material and a binder to a conductive material dispersion solution containing carbon nanotubes decreases in viscosity and elasticity, changes rapidly over time during coating, and causes cracks in the formation of an electrode active material layer. Therefore, when the phase angle of the conductive material dispersion solution is controlled such that it becomes 18° or less to have solid-like properties, the occurrence of cracks in the produced electrode active material layer is prevented. Patent Literature 2 discloses a conductive material dispersion solution containing a conductive material containing bundled carbon nanotubes, a dispersing agent containing hydrogenated nitrile rubber, and a dispersion medium, and having a complex elastic modulus (G*|@ 1 Hz) of 20 Pa to 500 Pa at a frequency of 1 Hz, which is measured with a rheometer. According to Patent Literature 2, since it is difficult to evaluate the dispersibility of linear carbon nanotubes because the particle size varies depending on the measurement angle in particle size analysis, it is attempted to control dispersibility and viscosity properties in the conductive material dispersion solution according to the complex elastic modulus of the conductive material dispersion solution. According to evaluation of examples in Patent Literature 2, it has been confirmed that the value of the complex elastic modulus, which is a magnitude of the elastic modulus, becomes larger as the dispersion state of the conductive material dispersion solution becomes better.

Patent Literature 3 discloses a method in which a conductive material such as acetylene black and a first binder are mixed to obtain a conductive material paste 1, a second binder is added to the conductive material paste 1 to obtain a conductive material paste 2, and a positive electrode active material is mixed with the conductive material paste 2 to produce a slurry for a secondary battery positive electrode. According to Patent Literature 3, the first binder contains a

resin containing at least one monomer unit selected from the group consisting of a conjugated diene monomer unit, a 1-olefin monomer unit, and a (meth)acrylate ester monomer unit, the second binder contains a fluorine polymer such as polyvinylidene fluoride, the first binder and the second binder are added and mixed in this order, and thus the conductive material is appropriately dispersed in the obtained slurry, a favorable conductive network is formed between conductive materials in the produced positive electrode mixture layer, cycle characteristics of secondary batteries are improved, and capacity deterioration at a low temperature is reduced. Patent Literature 4 discloses a method in which a conductive material paste containing a conductive material such as acetylene black and a binder, and additionally containing a fluorine polymer such as polyvinylidene fluoride, and having a solid content concentration of 5 mass% or more and 15 mass% or less is prepared, and the conductive material paste and the positive electrode active material are mixed to produce a slurry for a secondary battery positive electrode. According to Patent Literature 4, when the solid content of the conductive material paste is within this range, a favorable conductive network is formed between conductive materials in the produced positive electrode mixture layer, cycle characteristics of secondary batteries are improved, and the internal resistance is reduced.

Ideally, as the conductive material becomes finer, a more efficient conductive network can be formed, but as the conductive material becomes finer, the specific surface area becomes larger, the cohesive force becomes stronger, and it becomes more difficult to obtain a high-concentration and favorable resin composition. If the concentration of the conductive material increases too much, the resin composition becomes highly viscous and its fluidity deteriorates. In addition, the fine conductive material and the binder resin may become entangled, which results in poor dispersion. For a resin composition with poor fluidity, when the resin composition is transported into a tank or the like or stored for a long time and then used, there is a problem that it is difficult to extract it from the tank or the like. On the other hand, in a resin composition with a low conductive material concentration, there are a problem of a low degree of freedom in design when materials such as an active material are added and a problem of high transportation costs per conductive material solid content. Therefore, there is an urgent need to obtain a resin composition in which a fine conductive material with a high fluidity is satisfactorily dispersed.

[Citation List]

[Patent Literature]

[Patent Literature 1]
Published Japanese Translation No. 2018-534731 of the PCT International Publication
[Patent Literature 2]
Published Japanese Translation No. 2018-533175 of the PCT International Publication
[Patent Literature 3]
Japanese Patent Laid-Open No. 2015-133302
[Patent Literature 4]
Japanese Patent Laid-Open No. 2015-128012

[Summary of Invention]

[Technical Problem]

The conductive material dispersion solution disclosed in Patent Literature 1 has relatively strongly solid-like properties, and the conductive material dispersion solution disclosed in Patent Literature 2 has a relatively strong elastic behavior, and there are problems that all dispersion solutions have poor fluidity and are unsuitable for transportation and long-term storage in a tank. In Patent Literature 1, a conductive material dispersion solution having strongly solid-like properties is obtained by controlling the phase angle, and the active material and the binder are then added to produce a composition. However, a conductive material dispersion solution having strongly solid-like properties may have high viscosity and poor miscibility with the binder subsequently added. In Patent Literature 2, the conductive material dispersion solution in which the dispersibility and viscosity properties are controlled according to the complex elastic modulus is obtained, and the active material and the binder are then added to produce a composition. However, by simply controlling the conductive material dispersion solution according to the complex elastic modulus, sufficient miscibility with the subsequently added binder may not be obtained. For example, when a binder resin is added to a carbon nanotube dispersion solution in which carbon nanotubes are finely dispersed while maintaining the fiber length, the carbon nanotubes aggregate, the binder resin is gelled, and thus the dispersibility and fluidity of the resin composition may deteriorate.

In Patent Literature 3 and 4, acetylene black was specifically investigated as a conductive material, but carbon nanotubes have not been sufficiently investigated. In a fibrous carbon material such as carbon nanotubes, fibers are broken due to a dispersion treatment or a stirring treatment in a procedure of producing a mixture slurry, and thus a conductive network within a conductive material in the electrode film may deteriorate. In addition, when carbon nanotubes having a long fiber length are contained in the mixture slurry, fibers and resin components tend to become entangled and aggregate, and if the electrode film is produced when fibers are not disentangled, a conductive network within a conductive material in the electrode film may deteriorate.

The inventors conducted a detailed comparative study regarding small differences in the dispersion state of the conductive material, and found that, when fibrous carbon nanotubes are used as a conductive material, regarding the particle size distribution and the viscosity, which have often used as indicators of the degree of dispersion in the related art, even if the measurement values are the same, properties may be different during use in secondary batteries, and the dispersion state of the conductive material is not accurately determined. For example, in the case of the particle size distribution, since calculation is performed assuming that non-spherical fibrous particles are spherical, deviation from reality is likely to occur. In the case of the viscosity, generally, it is said that the viscosity decreases as the dispersion state of the conductive material becomes more favorable. However, when the conductive material is fibrous and likely to be entangled, even if the conductive material is uniformly and stably loosened in a dispersion medium, since the conductive material itself has structural viscosity, the elasticity becomes stronger. In addition, when fibers are broken, the viscosity changes due to two factors of deaggregation and breakage, and thus it is difficult to accurately express the state of the conductive material with the viscosity alone. When carbon nanotube fibers are broken, since it is difficult to form a well-developed conductive network in the electrode due to an increase in contact resistance between carbon nanotubes, it is effective to disperse the fibers uniformly with as little breaking as possible. In the related art, fine control of the dispersion state of the resin composition containing carbon nanotubes has not been sufficiently achieved.

That is, an objective to be achieved by the present invention is to provide a resin composition for secondary battery electrodes in which the dispersion state of carbon nanotubes as a conductive material is finely controlled and which has high dispersibility and fluidity when it contains a fluororesin and also a mixture slurry for secondary battery electrodes which has favorable dispersibility of carbon nanotubes when it contains an active material. More specifically, a non-aqueous electrolyte secondary battery with a high output, a high capacity, and a long lifespan, and an electrode film used therein are provided.

[Solution to Problem]

The inventors conducted extensive studies in order achieve the above objective, and found that, when a resin composition contains carbon nanotubes, a dispersing agent, a fluororesin, and a dispersion medium and has a product ($X \times Y$) of a complex elastic modulus X(Pa) and a phase angle Y(°) at 25°C and 1 Hz obtained by dynamic viscoelastic measurement that is 30 or more and 5,000 or less, fluidity is maintained when it contains carbon nanotubes and a fluororesin, long carbon nanotube fibers are dispersed in the resin composition while appropriately maintaining them without breakage, an electrode film is formed using the resin composition, and thus a well-developed conductive network can be formed in the electrode film. Thereby, it is possible to provide a secondary battery with a high output, a high capacity, and a long lifespan.

Specifically, the present invention includes the following embodiments. The embodiments of the present invention are not limited to the following.

<1> A resin composition for secondary battery electrodes, which contains carbon nanotubes, a dispersing agent, a fluororesin, and a dispersion medium, but does not contain an active material, and has a product ($X \times Y$) of a complex elastic modulus X(Pa) and a phase angle Y(°) at 25°C and 1 Hz obtained by dynamic viscoelastic measurement that is 30 or more and 5,000 or less.

<2> The resin composition for secondary battery electrodes according to <1>,
wherein the complex elastic modulus at 25°C and 1 Hz obtained by dynamic viscoelastic measurement is 0.1 Pa or more and 300 Pa or less.

<3> The resin composition for secondary battery electrodes according to <1> or <2>,
wherein the phase angle at 25°C and 1 Hz obtained by dynamic viscoelastic measurement is 3° or more and 90° or less.

<4> The resin composition for secondary battery electrodes according to any one of <1> to <3>,
wherein the content of the carbon nanotubes based on a total amount of the resin composition is 0.5 mass% or more and 15 mass% or less.

<5> The resin composition for secondary battery electrodes according to any one of <1> to <4>,
wherein a mass proportion of the dispersing agent with respect to the carbon nanotubes is 0.01 or more and 2 or less.

<6> The resin composition for secondary battery electrodes according to any one of <1> to <5>,

wherein a mass proportion of the fluororesin with respect to the carbon nanotubes is 0.1 or more and 10 or less.
<7> The resin composition for secondary battery electrodes according to any one of <1> to <6>,
wherein the carbon nanotubes include single-walled carbon nanotubes and multi-walled carbon nanotubes.
<8> The resin composition for secondary battery electrodes according to any one of <1> to <7>, further containing carbon black.
<9> A method for producing a mixture slurry for secondary battery electrodes, including
adding an active material to the resin composition for secondary battery electrodes according to any one of <1> to <8>.
<10> The method for producing a mixture slurry for secondary battery electrodes according to <9>, further including additionally adding carbon black before, after, or at the same time as an active material is added to the resin composition for secondary battery electrodes or a combination thereof.
<11> A method for producing an electrode film, including:

producing a mixture slurry by adding an active material to the resin composition for secondary battery electrodes according to any one of <1> to <8>, and
producing an electrode film by applying the mixture slurry.

<12> A method for producing a secondary battery including a positive electrode, a negative electrode, and an electrolyte, including:

producing a mixture slurry by adding an active material to the resin composition for secondary battery electrodes according to any one of <1> to <8>; and
producing at least one of the positive electrode and the negative electrode by forming an electrode film by applying the mixture slurry to a current collector.

[Advantageous Effects of Invention]

According to an embodiment of the present invention, it is possible to provide a resin composition for secondary battery electrodes, which has high fluidity and dispersibility. According to another embodiment of the present invention, it is possible to provide a mixture slurry for secondary battery electrodes with favorable dispersibility of carbon nanotubes. According to still another embodiment of the present invention, it is possible to provide a non-aqueous electrolyte secondary battery with a high output, a high capacity, and a long lifespan and an electrode film used therein.

[Description of Embodiments]

Hereinafter, a resin composition for secondary battery electrodes, a method for producing a mixture slurry for secondary battery electrodes, a method for producing an electrode film, and a method for producing a secondary battery according to embodiments of the present invention will be described in detail. The present invention is not limited to the following embodiments, and the present invention also includes embodiments that are performed without changing the gist of the present invention.

In this specification, a carbon nanotube may be referred to as "CNT." Hydrogenated nitrile rubber may be referred to as "H-NBR," and N-methyl-2-pyrrolidone may be referred to as "NMP." Here, in this specification, the carbon nanotube dispersion solution may be simply referred to as a "CNT dispersion solution" or "dispersion solution," and the resin composition for secondary battery electrodes may be simply referred to as a "resin composition."

<Carbon nanotubes>

The resin composition for secondary battery electrodes contains carbon nanotubes, a dispersing agent, a fluororesin, and a dispersion medium, and may further contain an optional component. Carbon nanotubes (CNTs) function as a conductive material. The resin composition may also contain a conductive material other than carbon nanotubes. Examples of other conductive materials include carbon materials such as carbon black, fullerene, graphene, multi-walled graphene, and graphite. When a conductive material other than CNTs is used, in consideration of adsorption performance of the dispersing agent, carbon black is preferable, and for example, carbon black such as acetylene black, furnace black, hollow carbon black, and ketjen black may be exemplified. Such carbon black may be neutral, acidic, or basic, and oxidized carbon black and graphitized carbon black may be used. Other conductive materials may be used alone or two or more thereof may be used in combination.

CNTs to be added to the resin composition preferably have the following physical properties. CNTs have a shape in which flat graphite is wound into a cylindrical shape and include single-walled CNTs and multi-walled CNTs, and these may be mixed. Single-walled CNTs have a structure in which one graphite layer is wound. Multi-walled CNTs have a structure in which two, three or more graphite layers are wound. In addition, side walls of CNTs may not have a graphite structure. In addition, for example, CNTs having side walls having an amorphous structure are also CNTs in

this specification.

The shape of CNTs is not limited. Examples of such shapes include various shapes such as a needle shape, a cylindrical tubular shape, a fishbone shape (a fishbone or cup-laminated type), a trump shape (platelet), and a coil shape. Among these, the shape of CNTs is preferably a needle shape or a cylindrical tubular shape. CNTs may be of a single shape or of a combination of two or more shapes.

Examples of forms of CNTs include graphite whiskers, filamentous carbon, graphite fibers, ultrafine carbon tubes, carbon tubes, carbon fibrils, carbon microtubes and carbon nanofibers. Carbon nanotubes may have one of these forms or a form in which two or more thereof are combined.

The average outer diameter of CNTs is preferably 1 nm or more and more preferably 3 nm or more. In addition, the average outer diameter is preferably 30 nm or less, more preferably 20 nm or less, and still more preferably 15 nm or less. Here, the average outer diameter of CNTs can be calculated by first observing and imaging CNTs using a transmission electron microscope, selecting 300 arbitrary CNTs in the observation image, and measuring the outer diameters thereof.

The resin composition may be prepared by separately preparing two or more types of CNTs having different average outer diameters, and adding them to a dispersion medium. When two or more types of CNTs having different average outer diameters are used as CNTs, the average outer diameter of the first CNTs is preferably 1 nm or more and less than 5 nm. The average outer diameter of second CNTs is preferably 3 nm or more and 30 nm or less, more preferably 5 nm or more and 30 nm or less, and still more preferably 20 nm or less. When two or more types of CNTs having different average outer diameters are used as CNTs, the mass ratio between the first CNTs and the second CNTs is preferably 1:1 to 1:100, more preferably 1:3 to 1:100, still more preferably 1:10 to 1:100, and yet more preferably 1:10 to 1:50.

Here, when single-walled carbon nanotubes are used as the first CNTs and multi-walled carbon nanotubes are used as the second CNTs, the average outer diameter of single-walled carbon nanotubes is preferably 1 nm or more and 3 nm or less, more preferably 1.3 nm or more and 2.5 nm or less, and still more preferably 1.5 nm or more and 2.0 nm or less. The average outer diameter of multi-walled carbon nanotubes is preferably more than 3 nm and 30 nm or less, more preferably 3 nm or more and 20 nm or less, and still more preferably 5 nm or more and 15 nm or less. In the resin composition, carbon nanotubes may include a combination of single-walled carbon nanotubes and multi-walled carbon nanotubes. In this case, the mass ratio between the single-walled carbon nanotube and multi-walled carbon nanotubes is preferably 1:1 to 1:100, more preferably 1:2 to 1:50, and still more preferably 1:3 to 1:10. Since the single-walled carbon nanotubes and the multi-walled carbon nanotubes have different outer diameters and fiber lengths, they are different in terms of favorable conductive network formation and dispersion stabilization. If the mass ratio between the single-walled carbon nanotubes and the multi-walled carbon nanotubes is set to be within the above range, the entanglement of the carbon nanotubes is restricted and a dispersion solution having excellent fluidity is obtained.

The average fiber length of CNTs is preferably 0.5 μm or more, more preferably 0.8 μm or more, and still more preferably 1.0 μm or more. In addition, the average fiber length is preferably 20 μm or less and more preferably 10 μm or less. Here, the average fiber length of CNTs can be calculated by first observing and imaging CNTs using a scanning electron microscope, selecting 300 arbitrary CNTs in the observation image, and measuring respective fiber lengths thereof.

The value obtained by dividing the fiber length of CNTs by the outer diameter is the aspect ratio. A typical aspect ratio can be determined using the values of the average fiber length and the average outer diameter. As the conductive material has an increasingly higher aspect ratio, higher conductivity can be obtained when an electrode is formed. The aspect ratio of CNTs is preferably 30 or more, more preferably 50 or more, and still more preferably 80 or more. In addition, the aspect ratio is preferably 10,000 or less, more preferably 3,000 or less, and still more preferably 1,000 or less.

The specific surface area of CNTs is preferably 100 $m^2/g$ or more, more preferably 150 $m^2/g$ or more, and still more preferably 200 $m^2/g$ or more. In addition, the specific surface area is preferably 1,200 $m^2/g$ or less and more preferably 1,000 $m^2/g$ or less. The specific surface area of CNTs is calculated by a BET method according to nitrogen adsorption measurement. When the average outer diameter, the average fiber length, the aspect ratio, and the specific surface area of CNTs are within the above ranges, it becomes easier to form a developed conductive path in the electrode.

The carbon purity of CNTs is represented by the content (mass%) of carbon atoms in CNTs. The carbon purity based on 100 mass% of CNTs is preferably 80 mass% or more, more preferably 90 mass% or more, still more preferably 95 mass% or more, and particularly preferably 98 mass% or more. If the carbon purity is set to be within the above range, it is possible to prevent problems such as the occurrence of short circuiting due to dendrites formed by impurities such as a metal catalyst.

In order to remove or reduce impurities such as a metal catalyst and increase the carbon purity, CNTs that have been subjected to a high purification treatment may be used. The high purification treatment method is not particularly limited, and a known method can be used. For example, a method of evaporating impurities by treating them at a high temperature (for example, 3,000°C) under an inert atmosphere may be used. This method is preferable because a

treatment can be performed under conditions with relatively little risk of explosion or the like. In addition, a method in which a halogen-containing gas (chlorine gas, fluorine gas, carbon tetrachloride gas, carbon tetrafluoride gas, etc.) is mixed into an inert gas, the mixture is heated, and halogenated impurities are evaporated may be used. Since the boiling point of impurities is lowered by halogenation, the impurities can be removed at a lower temperature (for example, 1,600°C) than when halogenation is not performed, and this is preferable because the carbon purity can be increased without changing physical properties such as CNT crystallinity, density, and conductivity. In addition, by increasing the density of CNTs and then heating them, it is possible to restrict scattering of CNTs, increase the amount of processing, and efficiently perform purification. In addition, a method in which CNTs are impregnated in an acidic or basic solution and impurities are dissolved and removed may be used. When treated with an acidic or basic solution, functional groups may be introduced to the surface or terminals of CNTs, and if the amount of functional groups is small, the dispersibility may be easily improved. In addition, if the number of functional groups increases, the conductivity may be easily reduced.

When CNTs are dispersed in a dispersing machine such as a bead mill due to collision with media or when a treatment such as repeatedly passing through a dispersing machine is performed over a long time, the CNTs may be damaged to produce a short piece-like carbonaceous material. When a short piece-like carbonaceous material is produced, the viscosity of the resin composition decreases, the gloss of the coating obtained by applying and drying the resin composition increases, and thus it seems that the dispersion state is favorable based on determination only from these evaluation results. However, the short piece-like carbonaceous material has high contact resistance and hardly forms a conductive network, and thus the resin composition produced through such a dispersion treatment may deteriorate the resistance of the electrode. The extent to which the short piece-like carbonaceous material is produced can be determined by a method in which a sample obtained by diluting a dispersion solution, and dropwise adding it to a substrate having a smooth surface and favorable affinity with a dispersion medium and drying it is observed under a scanning electron microscope. When dispersion conditions and the composition of the dispersion solution are adjusted so that a 0.1 μm or less carbonaceous material is not produced, it is possible to obtain an electrode having high conductivity.

The carbon nanotubes may be surface-treated carbon nanotubes. The carbon nanotubes may be carbon nanotube derivatives to which a functional group represented by a carboxy group is added. In addition, carbon nanotubes containing substances represented by organic compounds, metal atoms, or fullerene can also be used.

The carbon nanotubes may be carbon nanotubes produced by any method. Carbon nanotubes can be generally produced by a laser ablation method, an arc discharge method, a thermal CVD method, a plasma CVD method and a combustion method, but the present invention is not limited thereto. For example, carbon nanotubes can be produced by catalytically reacting a carbon source with a catalyst in an atmosphere with an oxygen concentration of 1 vol% or less at 500 to 1,000°C. The carbon source may be at least one of hydrocarbons and alcohols.

Any conventionally known raw material gas can be used as the carbon source for carbon nanotubes. For example, as a raw material gas containing carbon, hydrocarbons represented by methane, ethylene, propane, butane and acetylene, carbon monoxide, and alcohols can be used, but the present invention is not limited thereto. Particularly, in consideration of ease of use, it is desirable to use at least one of hydrocarbon and alcohols as a raw material gas.

<Dispersing agent>

The resin composition contains a dispersing agent. The dispersing agent is preferably one that can stabilize dispersion of CNTs in the resin composition. As the dispersing agent, both a resin type dispersing agent and a surfactant can be used, but a resin type dispersing agent is preferable because it has a strong adsorption force with respect to CNTs and favorable dispersion stability is obtained. Depending on properties required for dispersing carbon nanotubes, a suitable type of dispersing agent can be appropriately used in a suitable addition amount.

As the resin type dispersing agent, (meth)acrylic polymers, polymers derived from ethylenically unsaturated hydrocarbon, cellulose derivatives, copolymers thereof and the like can be used.

Examples of polymers derived from ethylenically unsaturated hydrocarbon include polyvinyl alcohol resins, polyvinylpyrrolidone resins, polyacrylonitrile resins, and nitrile rubbers. Examples of polyvinyl alcohol resins include polyvinyl alcohol, modified polyvinyl alcohols having a functional group (for example, an acetyl group, a sulfo group, a carboxy group, a carbonyl group, and an amino group) other than a hydroxyl group, polyvinyl alcohols modified with various salts, other polyvinyl alcohols modified with anions or cations, and polyvinyl acetals (polyvinyl acetoacetal, polyvinyl butyral, etc.) that have been acetal-modified (acetoacetal-modified or butyral-modified) with aldehydes. The polyacrylonitrile resin may be a polyacrylonitrile homopolymer, a polyacrylonitrile copolymer, a modified product thereof, or the like, and is preferably a polyacrylonitrile resin having at least one selected from the group consisting of active hydrogen groups such as a hydroxyl group, a carboxy group, a primary amino group, a secondary amino group, and a mercapto group, a basic group, and an alkyl group derived and introduced from (meth)acrylic acid alkyl ester or α-olefin, and for example, an acrylonitrile copolymer described in Japanese Patent Laid-Open No. 2020-163362 can be used. The polyacrylonitrile resin may be a polyacrylonitrile homopolymer, a polyacrylonitrile copolymer, a modified product thereof, or the like, and is preferably a polyacrylonitrile resin having at least one selected from the group consisting of

active hydrogen groups such as a hydroxyl group, a carboxy group, a primary amino group, a secondary amino group, and a mercapto group, a basic group, and an alkyl group derived and introduced from (meth)acrylic acid alkyl ester or the like, and for example, an acrylonitrile copolymer described in Japanese Patent Laid-Open No. 2020-163362 can be used. Examples of nitrile rubbers include acrylonitrile butadiene rubber, and hydrogenated acrylonitrile butadiene rubber. Examples of cellulose derivatives include cellulose acetate, cellulose acetate butyrate, cellulose butyrate, cyanoethyl cellulose, ethyl hydroxyethyl cellulose, nitro cellulose, methyl cellulose, ethyl cellulose, hydroxyethyl cellulose, hydroxypropyl cellulose, hydroxypropyl methylcellulose, carboxymethyl cellulose and copolymers thereof. In addition, dispersing agents described in WO 2008/108360, pamphlet, Japanese Patent Laid-Open No. 2018-192379, Japanese Patent Laid-Open No. 2019-087304, and Japanese Patent No. 6524479, Japanese Patent Laid-Open No. 2009-026744 may be used, but the present invention is not limited thereto. Particularly, methyl cellulose, ethyl cellulose, polyvinyl alcohol, polyvinyl butyral, polyvinylpyrrolidone, polyacrylonitrile homopolymers, polyacrylonitrile copolymers, and hydrogenated acrylonitrile butadiene rubber are preferable. Polymers obtained by introducing other substituents into some of these polymers, modified polymers and the like may be used. In consideration of affinity balance between the substance to be dispersed and the dispersion medium and resistance against the electrolytic solution, the weight average molecular weight of the resin type dispersing agent is preferably 500,000 or less, more preferably 300,000 or less, and preferably 3,000 or more and more preferably 5,000 or more. The resin type dispersing agents may be used alone or two or more thereof may be used in combination.

Examples of product names of commercially available polyvinyl alcohol resin include: Kuraray Poval (polyvinyl alcohol resin, commercially available from Kuraray Co., Ltd.), Gohsenol, Gohsenx (polyvinyl alcohol resin, commercially available from The Nippon Synthetic Chemical Industry Co., Ltd.), Denka Poval (polyvinyl alcohol resin, commercially available from Denka Co., Ltd.), and J-Poval (polyvinyl alcohol resin, commercially available from Japan Vam & Poval Co., Ltd.), in various grades. In addition, modified polyvinyl alcohols having various functional groups are also available. In addition, those synthesized by a known synthesis method may be used. Specific examples of commercially available polyvinylpyrrolidone resins include Luvitec K17 (K value : 15.0 to 19.0, low molecular weight), K30 (K value 27.0 to 33.0), K80 (K value 74.0 to 82.0), K85 (K value 84.0 to 88.0), K90 (K value 88.0 to 92.0), K90HM (K value 92.0 to 96.0, high molecular weight) (commercially available from BASF JAPAN LTD.), K15, K30, K90, K120 (commercially available from ISP), polyvinylpyrrolidone K30 (K value 27.0 to 33.0), K85 (K value 84.0 to 88.0), K90 (K value 88.0 to 96.0) (commercially available from Nippon Shokubai Co., Ltd.), PVP K12 (K value 10 to 14), K15 (K value 13 to 19), K30 (K26 to K35), K60 (K value 50 to 62), K90 (K value 88 to 100), and K120 (K value 114 to 130) (commercially available from DSP Gokyo Food & Chemical Co., Ltd.). In order to prevent the viscosity from increasing, polyvinylpyrrolidone preferably has a K value of 150 or less, more preferably has a K value of 100 or less, and still more preferably has a K value of 85 or less. Product names of commercially available nitrile rubbers include: Therban (hydrogenated nitrile rubber, commercially available from ARLANXEO), Baymod (nitrile rubber, commercially available from ARLANXEO), Zetpole (hydrogenated nitrile rubber, commercially available from Zeon Corporation), and Nipole NBR (nitrile rubber, commercially available from Zeon Corporation), in various grades with different nitrile ratios, hydrogenation rates, molecular weights and the like. In addition, those synthesized by a known synthesis method may be used.

A surfactant may be used in place of or in addition to the above resin type dispersing agent. Surfactants are classified into anionic, cationic, or amphoteric ionic surfactants and nonionic surfactants.

A polymer containing at least an aliphatic hydrocarbon structural unit and a nitrile group-containing structural unit may be used as a resin type dispersing agent. The aliphatic hydrocarbon structural unit of the polymer may include an alkylene structural unit. This polymer may be hydrogenated.

The aliphatic hydrocarbon structural unit is a structural unit containing an aliphatic hydrocarbon structure and is preferably a structural unit composed of only an aliphatic hydrocarbon structure. The aliphatic hydrocarbon structure includes at least a saturated aliphatic hydrocarbon structure and may further include an unsaturated aliphatic hydrocarbon structure. The aliphatic hydrocarbon structure preferably includes at least a linear aliphatic hydrocarbon structure and may further include a branched aliphatic hydrocarbon structure.

Examples of aliphatic hydrocarbon structural units include alkylene structural units, alkenylene structural units, alkyl structural units, alkanetriyl structural units, and alkanetetrayl structural units. A structural unit containing a branch point such as an alkanetriyl structural unit, alkanetetrayl structural unit is a structural unit different from a structural unit containing a branched alkylene structure and a structural unit containing a branched alkyl structure to be described below. The aliphatic hydrocarbon structural unit preferably includes at least an alkylene structural unit.

The alkylene structural unit is a structural unit containing an alkylene structure, and preferably a structural unit composed of only an alkylene structure. The alkylene structure is preferably a linear alkylene structure or a branched alkylene structure.

The alkylene structural unit preferably includes a structural unit represented by the following General Formula (1A).

General Formula (1A)

[Chem. 1]

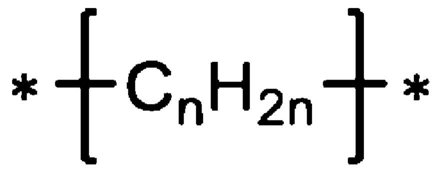

In General Formula (1A), n represents an integer of 1 or more. n is preferably an integer of 2 or more, more preferably an integer of 3 or more, and particularly preferably an integer of 4 or more. n is preferably an integer of 6 or less and more preferably an integer of 5 or less. n is particularly preferably 4. In this specification, "*" represents a bonding part with another structure.

The alkylene structural unit preferably includes a structural unit represented by the following General Formula (1B).

General Formula (1B)

[Chem. 2]

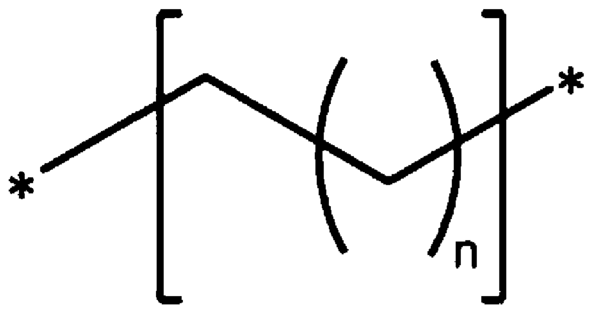

In General Formula (1B), n represents an integer of 1 or more. n is preferably an integer of 2 or more and more preferably an integer of 3 or more. n is preferably an integer of 5 or less and more preferably an integer of 4 or less. n is particularly preferably 3.

The alkylene structural unit preferably includes a structural unit represented by the following General Formula (1C).

General Formula (1C)

[Chem. 3]

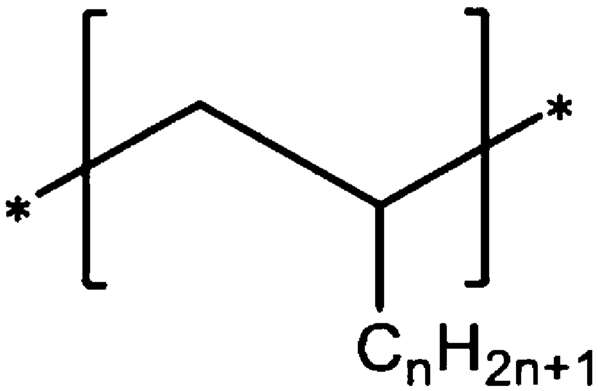

In General Formula (1C), n represents an integer of 1 or more. n is preferably an integer of 4 or less, more preferably an integer of 3 or less, and still more preferably an integer of 2 or less. n is particularly preferably 2.

A method of introducing an alkylene structural unit into a polymer is not particularly limited, and for example, the following method (1a) or (1b) may be exemplified.

In the method (1a), a polymer is prepared using a monomer composition containing a conjugated diene monomer according to a polymerization reaction. The prepared polymer contains a monomer unit derived from a conjugated diene monomer. In this specification, a "monomer unit derived from a conjugated diene monomer" may be referred to as a "conjugated diene monomer unit," and monomer units derived from other monomers may be abbreviated in the same way. Next, when hydrogen is added to the conjugated diene monomer unit, at least a part of the conjugated diene monomer unit is converted into an alkylene structural unit. In this specification, "hydrogen addition" may be referred to as "hydrogenation." The finally obtained polymer contains units obtained by hydrogenating conjugated diene monomer units as alkylene structural units.

Here, the conjugated diene monomer unit includes at least a monomer unit having one carbon-carbon double bond. For example, the 1,3-butadiene monomer unit, which is a conjugated diene monomer unit, includes at least one monomer unit selected from the group consisting of a monomer unit having a cis-1,4 structure, a monomer unit having a trans-1,4 structure and a monomer unit having a 1,2 structure, and may include two or more monomer units. In addition, the conjugated diene monomer unit is a monomer unit having no carbon-carbon double bond, and may further include a monomer unit containing a branch point. In this specification, "branch point" refers to a branch point in a branched polymer, and when the conjugated diene monomer unit contains a monomer unit containing a branch point, the prepared polymer is a branched polymer.

In the method (1b), a polymer is prepared using a monomer composition containing an $\alpha$-olefin monomer according to a polymerization reaction. The prepared polymer contains an $\alpha$-olefin monomer unit. The finally obtained polymer contains an $\alpha$-olefin monomer unit as an alkylene structural unit.

Among these, the method (1a) is preferable because the polymer can be easily produced. The number of carbon atoms of the conjugated diene monomer is 4 or more and preferably 4 or more and 6 or less. Examples of conjugated diene monomers include conjugated diene compounds such as 1,3-butadiene, isoprene, 2,3-dimethyl-1,3-butadiene, and 1,3-pentadiene. Among these, 1,3-butadiene is preferable. The alkylene structural unit preferably includes a structural unit obtained by hydrogenating a conjugated diene monomer unit (hydrogenated conjugated diene monomer unit), and more preferably includes a structural unit obtained by hydrogenating a 1,3-butadiene monomer unit (hydrogenated 1,3-butadiene monomer unit). The conjugated diene monomers may be used alone or two or more thereof may be used in combination.

Hydrogenation is preferably a method capable of selectively hydrogenating conjugated diene monomer units. Examples of hydrogenation methods include known methods such as an oil layer hydrogenation method and a water layer hydrogenation method.

Hydrogenation can be performed by a general method. Hydrogenation can be performed by treating, for example, a polymer having a conjugated diene monomer unit dissolved in an appropriate solvent with hydrogen gas in the presence of a hydrogenation catalyst. Examples of hydrogenation catalysts include iron, nickel, palladium, platinum, and copper.

In the method (1b), the number of carbon atoms in the α-olefin monomer is 2 or more, preferably 3 or more, and more preferably 4 or more. The number of carbon atoms in the α-olefin monomer is preferably 6 or less and more preferably 5 or less. Examples of α-olefin monomers include α-olefin compounds such as ethylene, propylene, 1-butene, and 1-hexene. The α-olefin monomers may be used alone or two or more thereof may be used in combination.

The alkylene structural unit preferably includes at least one selected from the group consisting of a structural unit containing a linear alkylene structure and a structural unit containing a branched alkylene structure, more preferably includes at least one selected from the group consisting of a structural unit composed of only a linear alkylene structure and a structural unit composed of only a branched alkylene structure, and still more preferably includes at least one selected from the group consisting of the structural unit represented by Formula (1B) and the structural unit represented by Formula (1C).

The alkylene structural unit may include a structural unit containing a linear alkylene structure and a structural unit containing a branched alkylene structure. When the alkylene structural unit includes a structural unit containing a linear alkylene structure and a structural unit containing a branched alkylene structure, the content of the branched alkylene structure based on the mass of the alkylene structural unit (that is, when the mass of the alkylene structural unit is 100 mass%) is preferably 70 mass% or less and more preferably 65 mass% or less. Particularly, the content is preferably 20 mass% or less, more preferably 18 mass% or less, and still more preferably 15 mass% or less. When the polymer includes a structural unit containing a linear alkylene structure and a structural unit containing a branched alkylene structure, the content of the branched alkylene structure based on the mass of the alkylene structural unit (that is, when the mass of the alkylene structural unit is 100 mass%), is for example, 1 mass% or more, and may be 5 mass% or more or 10 mass% or more.

In the aliphatic hydrocarbon structural unit, the content of the alkylene structural unit based on a total mass of the aliphatic hydrocarbon structural unit (that is, when the mass of the aliphatic hydrocarbon structural unit is 100 mass%) is preferably 60 mass% or more, more preferably 70 mass% or more, still more preferably 80 mass% or more, and particularly preferably 90 mass% or more. The content of the alkylene structural unit based on a total mass of the aliphatic hydrocarbon structural unit (that is, when the mass of the aliphatic hydrocarbon structural unit is 100 mass%) is, for example, less than 100 mass%, and may be 99.5 mass% or less, 99 mass% or less, or 98 mass% or less. The content of the alkylene structural unit may be 100 mass%.

The content of the aliphatic hydrocarbon structural unit based on the mass of the polymer (that is, when the mass of the polymer is 100 mass%) is preferably 40 mass% or more, more preferably 50 mass% or more, and still more preferably 60 mass% or more. The content of the aliphatic hydrocarbon structural unit based on the mass of the polymer (that is, when the mass of the polymer is 100 mass%) is preferably less than 85 mass%, more preferably 75 mass% or less, and still more preferably 70 mass% or less.

The nitrile group-containing structural unit is a structural unit containing a nitrile group, and preferably includes a structural unit containing an alkylene structure substituted with a nitrile group, and more preferably includes a structural unit composed of only an alkylene structure substituted with a nitrile group. The alkylene structure is preferably a linear or branched alkylene structure. The nitrile group-containing structural unit may further include a structural unit containing (or composed of only) an alkyl structure substituted with a nitrile group. The number of nitrile groups contained in the nitrile group-containing structural unit is preferably 1.

The nitrile group-containing structural unit preferably includes a structural unit represented by the following General Formula (2A).

General Formula (2A)

[Chem. 4]

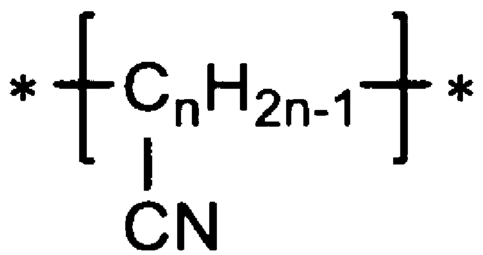

In General Formula (2A), n represents an integer of 2 or more. n is preferably an integer of 6 or less, more preferably an integer of 4 or less, and still more preferably an integer of 3 or less. n is particularly preferably 2.

The nitrile group-containing structural unit preferably includes a structural unit represented by the following General Formula (2B).

General Formula (2B)

[Chem. 5]

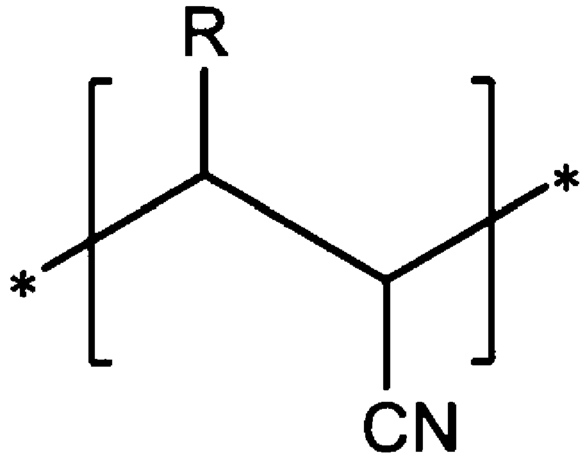

In General Formula (2B), R represents a hydrogen atom or a methyl group. R is preferably a hydrogen atom.

A method of introducing a nitrile group-containing structural unit into a polymer is not particularly limited, and a method (method (2a)) of preparing a polymer using a monomer composition containing a nitrile group-containing monomer according to a polymerization reaction can be preferably used. The finally obtained polymer contains a nitrile group-containing monomer unit as a nitrile group-containing structural unit. Examples of nitrile group-containing monomers that can form a nitrile group-containing structural unit include monomers containing a polymerizable carbon-carbon double bond and a nitrile group. Examples thereof include α,β-ethylenically unsaturated group-containing compounds having a nitrile group, and specific examples thereof include acrylonitrile and methacrylonitrile. Particularly, in order to increase the intermolecular force between polymers and/or between a polymer and a substance to be dispersed (substance to be adsorbed), the nitrile group-containing monomer preferably contains acrylonitrile. The nitrile group-containing monomers may be used alone or two or more thereof may be used in combination.

The content of the nitrile group-containing structural unit based on the mass of the polymer (that is, when the mass of the polymer is 100 mass%) is preferably 15 mass% or more, more preferably 20 mass% or more, and still more preferably 30 mass% or more. The content of the nitrile group-containing structural unit based on the mass of the polymer (that is, when the mass of the polymer is 100 mass%) is preferably 50 mass% or less, more preferably 46 mass% or less, and still more preferably 40 mass% or less. If the content of the nitrile group-containing structural unit is set to be within the above range, it is possible to control adsorption to a substance to be dispersed and affinity to a dispersion medium, and the substance to be dispersed can be stably present in a dispersion medium. In addition, it is possible to control affinity of the polymer to an electrolytic solution and to prevent problems such as an increase in resistance of the electrolytic solution due to the polymer being dissolved in the electrolytic solution within the battery.

The polymer may contain an optional structural unit. Examples of optional structural units include amide group-containing structural units and carboxy group-containing structural units.

As a preferable aspect of the polymer, a polymer in which a total content of aliphatic hydrocarbon structural units and nitrile group-containing structural units contained in the polymer based on the mass of the polymer is 80 mass% or more and 100 mass% or less may be exemplified. The total content is preferably 90 mass% or more, more preferably 95 mass% or more, and still more preferably 98 mass% or more.

In this specification, the content of the structural unit can be determined using the amount of monomers used and nuclear magnetic resonance (NMR) and/or infrared spectroscopy (IR) measurement.

The Mooney viscosity ($ML_{1+4}$, 100°C) of the polymer is preferably 20 or more and 80 or less. The Mooney viscosity of the polymer is 20 or more, preferably 30 or more, and more preferably 40 or more. In addition, the Mooney viscosity is 80 or less and preferably 70 or less. In this specification, the "Mooney viscosity ($ML_{1+4}$, 100°C)" can be measured at a temperature of 100°C according to JIS K6300-1. It is thought that, if the Mooney viscosity is set to be

within the above range, it is possible to impart an appropriate repulsive force when it is adsorbed to the conductive material and improve dispersion stability. If the Mooney viscosity is below the above range, there is concern of solubility in a solvent increasing and the balance between the conductive material and the dispersion medium deteriorating. In addition, if the Mooney viscosity is above the above range, the viscosity of the CNT dispersion solution and the resin composition containing it becomes too high, the energy transfer efficiency of the dispersing machine may decrease, a metal foreign substance derived from a raw material and mixed in cannot be efficiently removed by iron removal using a magnet or a method such as filtration and centrifugation, and battery performance may deteriorate due to the residual metal foreign substance.

The method for adjusting the Mooney viscosity of a polymer is not particularly limited, and for example, the Mooney viscosity can be adjusted by changing a polymer composition (a type and content of the structural unit, a hydrogenation rate, etc.), a structure (straight chain rate, etc.), a molecular weight, preparation conditions (a polymerization temperature, an amount of a molecular weight adjusting agent, etc.) and the like. Specifically, the Mooney viscosity of the polymer can be adjusted by the following method.

In the method (2a), the Mooney viscosity is reduced by increasing the amount of the molecular weight adjusting agent used in the preparation of the polymer.

In the method (2b), the Mooney viscosity of the polymer is reduced by modification such as adding a base to hydrolyze a nitrile group contained in the nitrile group-containing structural unit of the polymer.

In the method (2c), the Mooney viscosity is reduced by applying a mechanical shear force to the polymer.

In the method (2b), the Mooney viscosity can be reduced by mixing a polymer containing an aliphatic hydrocarbon structural unit and a nitrile group-containing monomer unit, a base, and a solvent. In addition, optional components may be mixed. The order of adding a polymer, a base and a solvent to a container and the mixing method are not limited, and they may be added to the container at the same time; a polymer, a base and a solvent may be added separately to the container; or either or both of a polymer and a base may be mixed with a solvent, a polymer-containing solution and/or a base-containing solution may be prepared, and the polymer-containing solution and/or the base-containing solution may be added to the container. Particularly, a method in which a base dispersion solution in which a base is dispersed in a solvent is added to a polymer solution in which a polymer is dissolved in a solvent with stirring is preferable because the nitrile group can be efficiently modified. For stirring, a disper (dispersing machine), a homogenizer or the like can be used. As the solvent, solvents to be described below can be used.

In addition to use in the method (2b), it is preferable for the resin composition to contain a base because wettability of CNTs in the dispersion medium is improved, the dispersibility is improved, and the dispersion stability is improved. At least one selected from among inorganic bases, inorganic metal salts, organic bases, and organic metal salts can be used as a base to be added.

Examples of inorganic bases and inorganic metal salts include chlorides, hydroxides, carbonates, nitrates, sulfates, phosphates, tungstates, vanadates, molybdates, niobates, and borates of alkaline metals or alkaline earth metals; and ammonium hydroxide. Among these, hydroxides or alkoxides of alkaline metals or alkaline earth metals are preferable because they can easily supply cations. Examples of hydroxides of alkaline metals include lithium hydroxide, sodium hydroxide, and potassium hydroxide. Examples of hydroxides of alkaline earth metals include calcium hydroxide and magnesium hydroxide. Among these, it is more preferable to use at least one selected from the group consisting of lithium hydroxide, sodium hydroxide, and potassium hydroxide. Here, the metal included in the inorganic base may be a transition metal.

Examples of organic bases include optionally substituted primary, secondary, and tertiary amine compounds having 1 to 40 carbon atoms (alkylamines, amino alcohols, etc.) and organic hydroxides.

Examples of optionally substituted primary alkylamines having 1 to 40 carbon atoms include alkylamines such as propylamine, butylamine, isobutylamine, octylamine, 2-ethylhexylamine, laurylamine, stearylamine, and oleylamine; amino alcohols such as 2-aminoethanol and 3-aminopropanol; and 3-ethoxypropylamine, and 3-lauryloxypropylamine.

Examples of optionally substituted secondary alkylamines having 1 to 40 carbon atoms include alkylamines such as dibutylamine, diisobutylamine, N-methylhexylamine, dioctylamine, and distearylamine, and amino alcohols such as 2-methylaminoethanol.

Examples of optionally substituted tertiary alkylamines having 1 to 40 carbon atoms include alkylamines such as triethylamine, tributylamine, N,N-dimethylbutylamine, N,N-diisopropylethylamine, dimethyloctylamine, trioctylamine, dimethyldecylamine, dimethyllaurylamine, dimethylmyristylamine, dimethylpalmitylamine, dimethylstearylamine, and dilauryl monomethylamine, triethanolamine, and 2-(dimethylamino)ethanol.

Organic hydroxides are salts containing organic cations and hydroxide ions. Examples of organic hydroxides include trimethyl-2-hydroxyethylammonium hydroxide, tetramethylammonium hydroxide, cetyltrimethylammonium hydroxide, hexadecyltrimethylammonium hydroxide, trimethylphenylammonium hydroxide, 3-trifluoromethyl-phenyltrimethylammonium hydroxide, and benzyltrimethylammonium hydroxide. Among these, it is particularly preferable to use at least one selected from the group consisting of trimethyl-2-hydroxyethylammonium hydroxide and tetramethylammonium hydroxide. Among these, in consideration of action on CNTs, it is more preferable to use at least one selected

from the group consisting of 2-aminoethanol, 3-aminopropanol, triethanolamine, and trimethyl-2-hydroxyethylammonium hydroxide.

Examples of organic metal salts include alkaline metal alkoxides and alkaline metal acetates. Examples of alkaline metal alkoxides include lithium methoxide, lithium ethoxide, lithium propoxide, lithium-t-butoxide, lithium-n-butoxide, sodium methoxide, sodium ethoxide, sodium propoxide, sodium-t-butoxide, sodium-n-butoxide, potassium methoxide, potassium ethoxide, potassium propoxide, potassium t-butoxide, and potassium n-butoxide. Among these, sodium-t-butoxide is preferable because it can easily supply cations. Here, the metal included in the inorganic base may be a transition metal.

The amount of the base used based on the mass of the polymer is preferably 0.1 mass% or more and more preferably 0.5 mass% or more. The amount of the base used based on the mass of the polymer is preferably 20 mass% or less, more preferably 15 mass% or less, and still more preferably 10 mass% or less. If the amount used is too small, the Mooney viscosity tends to be less likely to decrease. If the amount used is too large, it may cause corrosion inside the dispersing device and/or the battery.

In the method (2c), when a polymer containing a nitrile group-containing monomer unit and an aliphatic hydrocarbon structural unit is prepared, adjustment may be performed by applying a mechanical shear force, or adjustment may be performed by applying a mechanical shear force after the already prepared polymer containing a nitrile group-containing monomer unit and an aliphatic hydrocarbon structural unit is dissolved in a solvent in which the polymer can be dissolved. The Mooney viscosity can be reduced by applying a mechanical shear force to the polymer before it is dissolved using a roll, a kneader or the like, but since it is efficient to use the polymer that is dissolved in a solvent in which the polymer can be dissolved as a dispersing agent, it is more preferable to apply a shear force in a polymer solution state.

Examples of methods of applying a shear force in a polymer solution state include methods using a dispersion unit such as a homogenizer or a Silverson mixer. Although a shear force can be applied using a disper or the like, it is preferable to use a dispersion unit that can apply a higher shear force such as a homogenizer or a Silverson mixer. Examples of methods of applying a mechanical shear force to the polymer before it is dissolved include methods using a dispersion unit such as a kneader and a 2-roll mill.

The resin composition may further contain an inorganic base, an inorganic metal salt, an organic base, an organometallic salt, or a combination thereof in addition to the above dispersing agent. Specifically, it may contain an inorganic base, an inorganic metal salt, an organic base, an organometallic salt, or a combination thereof as described in the method (2b) for the polymer. The total amount of these based on a total amount of the resin composition is preferably 0.001 to 0.1 mass% and more preferably 0.005 to 0.05 mass%.

<Dispersion medium>

The resin composition contains a dispersion medium. The dispersion medium is not particularly limited, and is preferably a high dielectric constant solvent, and preferably includes a solvent composed of any one type of high dielectric constant solvent or a mixed solvent composed of two or more types thereof. In addition, one, two or more other solvents may be used in combination with the high dielectric constant solvent.

As the high dielectric constant solvent, amides (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocycles (cyclohexylpyrrolidone, 2-oxazolidone, 1,3-dimethyl-2-imidazolidinone, γ-butyrolactone, etc.), sulfoxides (dimethyl sulfoxide, etc.), sulfones (hexamethylphosphoric triamide, sulfolane, etc.), lower ketones (acetone, methyl ethyl ketone, etc.), carbonates(diethyl carbonate, dimethyl carbonate, ethyl methyl carbonate, fluoroethylene carbonate, propylene carbonate, ethylene carbonate), and also, tetrahydrofuran, urea, acetonitrile and the like can be used. The dispersion medium preferably contains an amide organic solvent and more preferably contains at least one selected from the group consisting of N-methyl-2-pyrrolidone and N-ethyl-2-pyrrolidone. The relative dielectric constant of the high dielectric constant solvent can be set to a numerical value described in a solvent handbook or the like, and is preferably 2.5 or more at 20°C.

<Fluororesin>

The resin composition contains a fluororesin. The fluororesin is a resin containing fluorine, and has excellent heat resistance, chemical resistance, and adhesion, and functions as a binder resin. The fluororesin may have a structure in which hydrogen in polyethylene is substituted with fluorine or trifluoromethyl. Examples of fluororesins include homopolymers such as polytetrafluoroethylene (PTFE), polyvinyl fluoride (PVF), polyvinylidene fluoride (PVdF), and polychlorotrifluoroethylene (PCTFE); and copolymers such as perfluoroalkoxyalkane (PFA), perfluoroethylene propene copolymers (FEP), ethylene-tetrafluoroethylene copolymers (ETFE), ethylene-chlorotrifluoroethylene copolymers (ECTFE), and tetrafluoroethylene-perfluorodioxole copolymers (TPE/PDD). These may be used alone or two or more thereof may be used in combination. Among fluororesins, in consideration of resistance, polytetrafluoroethylene (PTFE), polyvinyl fluoride

(PVF), polyvinylidene fluoride (PVdF), resins having these structural units, modified products thereof, or combinations thereof are preferable. Among these, polyvinylidene fluoride resins are preferable, and examples thereof include homopolymers of polyvinylidene fluoride; and copolymers of vinylidene fluoride with hexafluoropropylene, tetrafluoroethylene or the like. Polyvinylidene fluoride resins may be modified, and for example, an acidic group such as a carboxy group may be introduced. The fluororesins may be used alone or two or more thereof may be used in combination.

The weight average molecular weight (Mw) of the fluororesin is preferably 1,000,000 to 5,000,000, more preferably 200,000 to 3,000,000, and still more preferably 500,000 to 1,500,000 in order to maintain a good balance between resistance, adhesion and resin viscosity. The glass transition point of the fluororesin is preferably 20°C or lower, more preferably 10°C or lower, and still more preferably 0°C or lower in consideration of film formability of an electrode film.

Examples of commercial products of polyvinylidene fluoride and modified products thereof include KF polymer series "W#7300, W#7200, W#1700, W#1300, W#1100, W#9700, W#9300, W#9100, L#7305, L#7208, L#1710, L#1320, L#1120" (commercially available from Kureha Corporation) and "6008, 6010, 6012, 1015, 6020, 5130, 9007, 460, 41308, 11010, 21510, 31508, 60512" (commercially available from Solvaysolef series) (all are product names).

The resin composition may contain a binder resin other than the fluororesin and the resin type dispersing agent. Other binder resins are not particularly limited as long as they are generally used as binder resins for paints, and can be appropriately selected according to the purpose. The binder resin used in the resin composition is preferably a resin that can bond between substances such as active materials and CNTs. Examples of binder resins used in the resin composition include polymers or copolymers containing ethylene, propylene, vinyl chloride, vinyl acetate, maleic acid, acrylic acid, acrylic acid ester, methacrylic acid, methacrylic acid ester, styrene, and the like as structural units; polyurethane resin, polyester resin, phenol resin, epoxy resin, phenoxy resin, urea resin, melamine resin, alkyd resin, acrylic resin, formaldehyde resin, silicon resin; elastomers such as styrene-butadiene rubber and fluorine rubber; and conductive resins such as polyaniline and polyacetylene. In addition, modified products, mixtures, and copolymer of these resins may be used and the resins may be alone or two or more thereof may be used in combination.

<Resin composition>

A resin composition contains carbon nanotubes, a dispersing agent, a fluororesin, and a dispersion medium. The resin composition may appropriately contain, as necessary, optional components, for example, other additives such as a wetting agent, a surfactant, a pH adjusting agent, a wetting penetrant agent, and a leveling agent, other conductive materials, and resin components such as other binder resins, as long as they do not interfere with the objective of the present invention. The optional components can be added at any timing such as before the resin composition is produced, during mixing, after mixing, or a combination thereof. The resin composition for secondary battery electrodes is in a state before an active material is added. In this regard, the resin composition for secondary battery electrodes is distinguished from a mixture slurry containing an active material. That is, the resin composition for secondary battery electrodes is substantially free of an active material. This is a concept excluding a state in which an active material is intentionally added to the resin composition for secondary battery electrodes, and the amount of the active material based on a total mass of the resin composition for secondary battery electrodes may be 1 mass% or less, 0.5 mass% or less, or 0.1 mass% or less, or may be 0 mass%. The active material will be described below.

The dispersibility of CNTs in the resin composition can be evaluated by the complex elastic modulus and the phase angle obtained by dynamic viscoelastic measurement. In this specification, the complex elastic modulus and the phase angle of the resin composition are measurement values at 25°C and a frequency of 1 Hz. Specifically, measurement can be performed by methods described in examples. The complex elastic modulus of the resin composition indicates the hardness of the resin composition, and tends to be smaller as the dispersibility of CNTs is better and the viscosity of the resin composition is lower. However, when the fiber length of CNTs is long, even if the CNTs are uniformly and stably loosened in a medium, the numerical value of the complex elastic modulus may be large due to the structural viscosity of CNTs themselves. In addition, the value also changes depending on the influence of entanglement of CNTs, the dispersing agent, the fluororesin, and other resin components or an intermolecular force therebetween in addition to the dispersion state of CNTs.

In addition, the phase angle indicates a phase shift of stress waves when the strain applied to the resin composition is a sine wave. In the case of a pure elastic component, since the strain becomes a sine wave with the same phase as the applied strain, the phase angle becomes 0°. On the other hand, in the case of a pure viscous component, the stress wave is advanced by 90°. In a general viscoelasticity measurement sample, a sine wave having a phase angle of larger than 0° and smaller than 90° is obtained, and if the dispersibility of CNTs in the resin composition is good, the phase angle approaches 90°, which is an angle of the pure viscous component. However, like the complex elastic modulus, if the CNTs themselves have structural viscosity, even if the CNTs are uniformly and stably loosened in a dispersion medium, the numerical value of the phase angle may be small. In addition, like the complex elastic modulus, it also changes depending on the influence of entanglement of CNTs, the dispersing agent, the fluororesin, and other resin components or an intermolecular force therebetween in addition to the dispersion state of CNTs.

In the resin composition, when the product (X×Y) of the complex elastic modulus X(Pa) and the phase angle Y(°) is 30 or more and 5,000 or less, the resin composition has a high concentration and high fluidity, and an electrode film having very good conductivity can be obtained. The product (X×Y) of the complex elastic modulus X(Pa) and the phase angle Y(°) is preferably 30 or more, more preferably 50 or more, still more preferably 100 or more, and yet more preferably 500 or more. In addition, the product is preferably 5,000 or less, more preferably 3,000 or less, still more preferably 1,500 or less, and yet more preferably 1,000 or less. The product (X×Y) of the complex elastic modulus X(Pa) and the phase angle Y(°) is preferably 50 or more and 3,000 or less, more preferably 100 or more and 1,500 or less, and still more preferably 500 or more and 1,000 or less.

The complex elastic modulus of the resin composition obtained by dynamic viscoelastic measurement is preferably 0.1 Pa or more, more preferably 0.3 Pa or more, still more preferably 0.4 Pa or more, yet more preferably 0.5 Pa or more, and even more preferably 1 Pa or more. In addition, the complex elastic modulus is preferably 300 Pa or less, more preferably 200 Pa or less, still more preferably 100 Pa or less, yet more preferably 50 Pa or less, and even more preferably 30 Pa or less. 0.1 Pa or more and 300 Pa or less is more preferable.

The phase angle of the resin composition obtained by dynamic viscoelastic measurement is preferably 3° or more, more preferably 5° or more, still more preferably 10° or more, and particularly preferably 30° or more. In addition, the phase angle may be 90° or less, and is preferably 88° or less and more preferably 85° or less. The phase angle is more preferably 3° or more and 90° or less and more preferably 5° or more and 88° or less. In addition, in the resin composition, it is preferable for the product (X×Y) of the complex elastic modulus X(Pa) and the phase angle Y(°) to satisfy the above preferable range, and the complex elastic modulus and the phase angle obtained by dynamic viscoelastic measurement to satisfy the above preferable ranges.

A well-developed conductive network is formed by uniformly and satisfactorily dispersing CNTs having a long CNT fiber length while maintaining a certain length or longer. Therefore, it is not enough for simply the viscosity of the resin composition to be low (apparently) and dispersibility to be favorable, and it is particularly effective to combine the complex elastic modulus and the phase angle with a conventional indicator such as viscosity and to determine the dispersion state. When the complex elastic modulus and the phase angle are set to be within the above ranges, it is possible to obtain a resin composition having a favorable conductivity and electrode strength. For example, it is preferable for the resin composition to satisfy a complex elastic modulus of 0.1 Pa or more and 300 Pa or less and a phase angle of 3° or more and 90° or less, obtained by dynamic viscoelastic measurement.

The median diameter (μm) of the resin composition is preferably 40 μm or less and more preferably 35 μm or less. In addition, the median diameter (μm) of the resin composition is preferably 0.4 μm or more, more preferably 5.0 μm or less, and still more preferably 2.0 μm or less. If the median diameter is set to be within the above range, it is possible to obtain a resin composition in an appropriate dispersion state. If the median diameter is below the above range, the CNTs are present in an aggregated state, and if the median diameter is above the above range, since a large number of finely cut CNTs are produced, it is difficult to form an efficient conductive network.

The median diameter of the resin composition is measured using a particle size distribution measuring device. Specific measurement conditions are as follows: in device conditions of "Partical LA-960 V2" (product name, commercially available from HORIBA Ltd.), circulation/ultrasound operation conditions are circulation speed: 3, ultrasound intensity: 7, ultrasound duration: 1 minute, stirring speed: 1, and stirring mode: continuous. In addition, during air venting, an ultrasonic operation is performed at an ultrasound intensity of 7 for an ultrasound duration of 5 seconds. The refractive index of NMP is 1.470, and the refractive index of the carbon material is 1.92. The measurement is performed after a measurement sample is diluted so that the transmittance of a red laser diode is 60 to 80%, and the particle size is based on the volume. More specifically, the median diameter can be measured by methods described in examples.

The dispersibility of CNTs in the resin composition can be evaluated by the gloss (that is, the intensity of reflected light at 60° with respect to the angle of incidence) measured at 60° of a coating obtained by application onto a smooth glass substrate and performing baking and drying. For light incident on the coating, if the dispersibility is better, the surface of the coating becomes smoother, and thus the gloss is higher. On the other hand, if the dispersibility is poorer, light is scattered due to the unevenness on the surface of the coating, and thus the gloss decreases. The gloss at 60° can be measured by methods described in examples. The gloss at 60° is preferably 10 or more and more preferably 20 or more. In addition, the gloss is preferably 120 or less and more preferably 110 or less. If the gloss is set to be within the above range, it is possible to obtain a resin composition in an appropriate dispersion state. If the gloss is below the above range, CNTs are present in an aggregated state, and if the gloss is above the above range, since a large number of finely cut CNTs are produced, it is difficult to form an efficient conductive network. In addition, since the gloss of the coating is affected not only by the dispersibility of CNTs but also the crystallinity or smoothness of the dispersing agent, it may be determined relatively.

The viscosity of the resin composition is measured using a type B viscometer, and the viscosity measured at 25°C and 60 rpm is preferably 10 mPa·s or more and less than 10,000 mPa·s, more preferably 10 mPa·s or more and less than 5,000 mPa·s, and still more preferably 10 mPa·s or more and less than 2,000 mPa·s.

The TI value of the resin composition can be calculated from a value obtained by dividing the viscosity (mPa·s)

at 6 rpm measured with a type B viscometer at 25°C by the viscosity (mPa·s) at 60 rpm. The TI value is preferably 1.0 or more and less than 10.0, more preferably 1.0 or more and less than 7.0, and still more preferably 1.0 or more and less than 5.0. If the TI value is higher, the structural viscosity caused by entanglement of the CNTs, the dispersing agent, the fluororesin, and other resin components or an intermolecular force therebetween increases, and if the TI value is lower, the structural viscosity decreases. If the TI value is set to be within the above range, it is possible to reduce entanglement of the CNTs, the dispersing agent, the fluororesin, and other resin components, and allow an intermolecular force therebetween to be appropriately exhibited.

The average fiber length of CNTs in the resin composition is preferably 0.1 μm or more, more preferably 0.2 μm or more, and still more preferably 0.3 μm or more. In addition, the average fiber length is preferably 20 μm or less and more preferably 10 μm or less. Here, the average fiber length of CNTs in the resin composition can be calculated by observing a sample obtained by dropwise adding a resin composition diluted 50-fold with a non-aqueous solvent such as NMP to a substrate and drying it under a scanning electron microscope, selecting 300 arbitrary CNTs in the observation image, measuring the fiber lengths thereof and averaging them.

Here, when the resin composition contains single-walled carbon nanotubes and multi-walled carbon nanotubes, the average fiber length of CNTs in the resin composition is preferably 0.1 to 50 μm, more preferably 0.5 to 40 μm, and still more preferably 1 to 40 μm. When the average fiber length of CNTs in the resin composition containing single-walled carbon nanotubes is within the above range, a favorable conductive network can be formed. Here, when the resin composition contains single-walled carbon nanotubes and multi-walled carbon nanotubes, the average fiber length of CNTs in the resin composition is an average value of the measured fiber lengths of all the carbon nanotubes contained in the resin composition.

The content of CNTs in the resin composition based on a total amount of the resin composition is preferably 0.1 mass% or more, more preferably 0.5 mass% or more, and still more preferably 1 mass% or more. In addition, the content is preferably 20 mass% or less, more preferably 15 mass% or less, still more preferably 10 mass% or less, and yet more preferably 5 mass% or less. If the content is set to be within the above range, the occurrence of precipitation or gelation can be reduced, and on the other hand, the CNTs can be favorably and stably present. The content is more preferably 0.1 to 20 mass% and more preferably 0.5 mass% or more and 15 mass% or less.

In the resin composition, the mass proportion of the dispersing agent with respect to the carbon nanotubes is preferably 0.01 or more, more preferably 0.05 or more, and still more preferably 0.1 or more. In addition, the mass proportion is preferably 2 or less, more preferably 1 or less, and still more preferably 0.5 or less. If the mass proportion is set to be within the above range, it is possible to further improve the dispersion stability of CNTs. The mass proportion is more preferably 0.01 or more and 2 or less and still more preferably 0.1 or more and 1 or less. The content of the dispersing agent in the resin composition based on a total amount of the resin composition is preferably 0.1 to 5 mass% and more preferably 0.4 to 1 mass%.

In the resin composition, the mass proportion of the fluororesin with respect to the carbon nanotubes is preferably 0.1 or more and more preferably 0.5 or more. In addition, the mass proportion is preferably 10 or less and more preferably 5 or less. If the mass proportion is set to be within the above range, the occurrence of precipitation and gelation can be reduced and on the other hand, sufficient resistance and adhesion of the electrode film can be obtained. The mass proportion is more preferably 0.1 or more and 10 or less and still more preferably 0.5 to 5. The content of the fluororesin in the resin composition based on a total amount of the resin composition is preferably 0.1 to 20 mass%, more preferably 0.5 to 15 mass%, and still more preferably 1 to 10 mass%. When the resin composition contains other binder resins, the amount of other binder resins based on a total amount of the fluororesin and the other binder resins is preferably 80 mass% or less, more preferably 50 mass% or less, and still more preferably 20 mass% or less.

In the resin composition, the content of the carbon nanotubes based on a total amount of the resin composition is 0.5 mass% or more and 15 mass% or less, and the mass proportion of the dispersing agent with respect to the carbon nanotubes is 0.01 or more and 0.2 or less, and the mass proportion of the fluororesin with respect to the carbon nanotubes is preferably 0.1 or more and 10 or less. In this range, when the product of the complex elastic modulus and the phase angle of the resin composition obtained by dynamic viscoelastic measurement is 30 or more and 5,000 or less, it is possible to further improve the dispersibility and fluidity of the resin composition.

The solid content in the resin composition is preferably 0.2 to 40 mass%, more preferably 0.5 to 20 mass%, and still more preferably 1 to 10 mass%.

A method for producing a resin composition is not particularly limited, and a resin composition can be obtained by mixing carbon nanotubes, a dispersing agent, a fluororesin, and a dispersion medium. For example, a method for producing a resin composition by mixing and dispersing CNTs, a dispersing agent, a fluororesin and a dispersion medium together or separately; a method for producing a resin composition by producing a CNT dispersion solution containing CNTs, a dispersing agent, and a dispersion medium and then adding a fluororesin and performing mixing; and a method for producing a resin composition by producing a dispersing agent solution containing a dispersing agent, a fluororesin, and a dispersion medium and then adding CNTs and performing dispersion may be exemplified. In any method, the CNT dispersion treatment is not particularly limited, and various dispersion devices may be used. The dispersion treatment

may be performed in multi-step treatments including two or more steps by arbitrarily adjusting the addition timing of the material to be used. The fluororesin may be added in the form of powder or varnish.

In consideration of dispersion efficiency of CNTs, CNTs, a dispersing agent and a dispersion medium are mixed and dispersed to produce a CNT dispersion solution, and the CNT dispersion solution and the fluororesin may be mixed. The method of adding a fluororesin to a CNT dispersion solution is not particularly limited, and for example, a powder fluororesin may be added to and mixed with a CNT dispersion solution. As another method, a varnish obtained by dissolving a fluororesin in a non-aqueous solvent may be added to and mixed with a CNT dispersion solution. The non-aqueous solvent for a varnish is not particularly limited, and any solvent that can be used in the resin composition may be used. A mixture in which a fluororesin is added to a CNT dispersion solution may be stirred. As a stirring device, a disper, a homogenizer or the like can be used. In addition, the mixture may be heated during stirring to promote dissolution of the fluororesin. The heating temperature may be 30 to 80°C. When a powder fluororesin is added to a CNT dispersion solution, since the amount of the non-aqueous solvent does not increase when a fluororesin is added, it is possible to provide a resin composition with a higher concentration. When the dispersibility in the CNT dispersion solution is sufficiently increased before a fluororesin is added, even if a powder fluororesin is added, it is possible to prevent the fluidity and dispersibility of the resin composition from decreasing.

When CNTs having different outer diameters are used in combination, since the wettability and dispersibility of the CNTs used in combination are different, a method in which CNT dispersion solutions in which CNTs, a dispersing agent, and a dispersion medium are mixed and dispersed are separately produced, and the two previously prepared two CNT dispersion solutions are mixed with a fluororesin is preferable. In addition, as another method, a fluororesin solution in which one CNT is mixed with a varnish obtained by dissolving a fluororesin in a non-aqueous solvent may be added to and mixed with a CNT dispersion solution prepared using other CNTs. More specifically, when single-walled carbon nanotubes and multi-walled carbon nanotubes are used in combination, a fluororesin solution in which a varnish obtained by dissolving a fluororesin in a non-aqueous solvent is mixed with single-walled carbon nanotubes may be added to and mixed with a CNT dispersion solution prepared using multi-walled carbon nanotubes. Here, in a process of mixing carbon nanotubes, a dispersing agent, a fluororesin, and a dispersion medium, single-walled carbon nanotubes and multi-walled carbon nanotubes may be mixed with other components at the same time.

<Dispersion method>

Examples of dispersion devices include kneaders, 2-roll mills, 3-roll mills, planetary mixers, ball mills, horizontal sand mills, vertical sand mills, annular bead mills, attritors, high shear mixers, high pressure homogenizers, and ultrasonic homogenizers. Among these, in order to finely disperse CNTs in a CNT dispersion solution or a resin composition and obtain suitable dispersibility, it is preferable to use a high shear mixer, a high pressure homogenizer, an ultrasonic homogenizer, or a combination thereof. Particularly, in order to promote wetting of the CNTs and loosen coarse particles, in the initial dispersion process, a high shear mixer is used, and subsequently, in order to perform dispersion while maintaining the aspect ratio of CNTs, it is preferable to use a high pressure homogenizer. The high pressure homogenizer can further improve the dispersibility of CNTs by performing multi-step circulation dispersion. In addition, when dispersion is performed with a high pressure homogenizer and dispersion is then additionally performed with a bead mill, it is possible to maintain the fiber length and uniformize the dispersion state. The pressure when a high pressure homogenizer is used is preferably 60 to 150 MPa and more preferably 60 to 120 MPa.

Dispersing methods using a dispersing device include batch type dispersion, pass-type dispersion, circulation dispersion and the like, and any method may be used and two or more methods may be combined. Batch type dispersion is a method in which dispersion is performed only by the main body of the dispersing device without using pipes or the like. Since it is easy to handle, this method is preferable when a small amount is produced. Pass-type dispersion is a dispersing method in which the main body of the dispersing device includes a tank that supplies a solution to be dispersed through a pipe and a tank the receives the solution to be dispersed, and the solution is passed through the main body of the dispersing device. In addition, circulation dispersion is a method in which the solution to be dispersed that has passed through the main body of the dispersing device is returned to the tank that supplies the solution to be dispersed and dispersion is performed while circulating. In any case, since dispersion further progresses as the treatment time is longer, pass or circulation can be repeated until a desired dispersion state is achieved, and the treatment amount can be increased by changing the size of the tank and the treatment time. Pass-type dispersion is preferable to circulation dispersion because it makes it easier to uniformize the dispersion state. Circulation dispersion is preferable to pass-type dispersion because it requires a simpler operation and production facility. In the dispersion process, crushing of aggregated particles, loosening, wetting, and stabilization of the conductive material and the like proceed sequentially or simultaneously, and the finished dispersion state differs depending on the manner in which this is performed. Therefore, it is preferable to manage the dispersion state in each dispersion process using various evaluation methods. For example, it can be managed by methods described in examples.

In addition, the resin composition may further contain carbon black, and carbon black functions as a conductive

material. Carbon black is preferably contained in the resin composition as long as the effects of the present invention are not impaired, and the content of carbon nanotubes based on a total mass of carbon black and carbon nanotubes is preferably 1 to 80 mass% and more preferably 1 to 50 mass%. Within this range, it is possible to control the dispersion state of carbon nanotubes, and maintain high dispersibility and better fluidity while containing a fluororesin. In addition, the content of carbon black based on a total mass of the resin composition is preferably 20 mass% or less and more preferably 15 mass% or less.

As an example of a method for producing a resin composition containing carbon black, a method of adding a binder resin to a CNT dispersion solution containing carbon black may be exemplified. In the method for producing a CNT dispersion solution, a step of adding carbon black is not particularly limited, and carbon black may be added before, after, or at the same time as when carbon nanotubes are added or a combination thereof. As another example of a method for producing a resin composition containing carbon black, a method of adding carbon black before, after, or at the same time as when a binder resin is added to a CNT dispersion solution or a combination thereof is used. In this method, it is preferable to add carbon black when carbon nanotubes are dispersed in a CNT dispersion solution. Alternatively, a combination of these methods may be used. That is, carbon black may be additionally added before, after, or at the same time as when a binder resin is added to a CNT dispersion solution containing carbon black or a combination thereof.

<Carbon nanotube dispersion solution>

Hereinafter, an example of a carbon nanotube dispersion solution prepared when a resin composition is produced will be described. Here, the resin composition having the above components and physical properties is not limited to those produced using the following CNT dispersion solution. The carbon nanotube dispersion solution contains carbon nanotubes, a dispersing agent, and a dispersion medium, and may appropriately contain optional components as long as they do not interfere with the objective of the present invention. The optional components can be added at any timing such as before a dispersion solution is produced, during dispersion, after dispersion, or a combination thereof. As the optional components, those described in the above resin composition can be used.

A CNT dispersion solution can be obtained by mixing and dispersing a composition containing CNTs, a dispersing agent and a dispersion medium. For the dispersion treatment, the method described for the resin composition described above can be used. The dispersion treatment of the CNT dispersion solution is preferably performed until the particle size of the CNT dispersion solution is sufficiently reduced. For example, the volume-based median diameter (μm) of the CNT dispersion solution after the dispersion treatment, which is determined by a laser diffraction/scattering type particle size distribution meter, is preferably 40 μm or less and more preferably 35 μm or less. In addition, the median diameter (μm) of the CNT dispersion solution is preferably 0.4 or more and preferably 5.0 or less and more preferably 2.0 or less.

The dispersion treatment of the CNT dispersion solution is preferably performed until the viscosity of the CNT dispersion solution is sufficiently reduced. For example, the viscosity of the CNT dispersion solution after dispersion, which is measured using a type B viscometer at 25°C and 60 rpm, is preferably 10 mPa·s or more and less than 10,000 mPa·s, more preferably 10 mPa·s or more and less than 5,000 mPa·s, still more preferably 10 mPa·s or more and less than 2,000 mPa·s, and yet more preferably 10 mPa·s or more and less than 1,000 mPa·s.

The content of CNTs based on a total amount of the CNT dispersion solution is preferably 0.1 mass% or more, more preferably 0.5 mass% or more, and still more preferably 0.8 mass% or more. In addition, the content is preferably 20 mass% or less and more preferably 10 mass% or less. If the content is set to be within the above range, the CNTs can be favorably and stably present. The content is more preferably 0.5 to 10 mass%. In addition, the content of CNTs is preferably adjusted appropriately according to a specific surface area of CNTs, affinity to a dispersion medium, a dispersion ability of a dispersing agent or the like so that a carbon nanotube dispersion solution having a suitable fluidity or viscosity can be obtained.

The content of the dispersing agent used based on 100 parts by mass of CNTs is preferably 5 to 200 parts by masse, more preferably 10 to 100 parts by mass, and still more preferably 15 to 80 parts by mass. The content of the dispersing agent based on a total amount of the CNT dispersion solution is preferably 0.1 to 10 mass% and more preferably 0.5 to 6 mass%. The solid content of the CNT dispersion solution is preferably 0.2 to 40 mass%, more preferably 0.5 to 20 mass%, and still more preferably 1 to 10 mass%.

<Method for producing mixture slurry for secondary battery electrodes>

A mixture slurry for secondary battery electrodes can be obtained by adding an active material to the above resin composition. The mixture slurry may appropriately contain, as necessary, other optional components as long as they do not interfere with the objective of the present invention. The optional components can be added at any timing such as before a mixture slurry is produced, during mixing, after mixing or a combination thereof. The optional components

may be those described for the above resin composition.

The active material may be a positive electrode active material or a negative electrode active material. In this specification, the positive electrode active material and the negative electrode active material may be simply referred to as an "active material." The active material is a material that becomes a basis for a battery reaction. Active materials can be divided into positive electrode active materials and negative electrode active materials based on electromotive force. The mixture slurry is preferably in a slurry form in order to improve uniformity and processability.

<Positive electrode active material>

The positive electrode active material is not particularly limited, and for example, for secondary battery applications, metal compounds such as metal oxides and metal sulfides that can reversibly dope or intercalate lithium ions can be used. Examples thereof include composite oxide powders containing lithium and transition metals such as lithium manganese composite oxides (for example, $Li_xMn2O_4$ or $LixMnO_2$), lithium nickel composite oxides (for example, $Li_xNiO_2$), lithium cobalt composite oxides ($Li_xCoO_2$), lithium nickel cobalt composite oxides (for example, $Li_xNi_{1-y}Co_yO_2$), lithium manganese cobalt composite oxides (for example, $Li_xMn_yCo_{1-y}O_2$), lithium nickel manganese cobalt composite oxides (for example, $Li_xNi_yCo_zMn_{1-y-z}O_2$), and spinel type lithium manganese nickel composite oxides (for example$Li_xMn_{2-y}Ni_yO_4$), transition metal oxide powders such as lithium phosphate powders having an olivine structure (for example, $Li_xFePO_4$, $Li_xFe_{1-y}Mn_yPO_4$, $Li_xCoPO_4$, etc.), manganese oxide, iron oxide, copper oxide, nickel oxide, vanadium oxide (for example $V_2O_5$, $V_6O_{13}$), and titanium oxide, and transition metal sulfide powders such as iron sulfate ($Fe_2(SO_4)_3$), $TiS_2$, and FeS. Here, x, y, and z are numbers, and $0<x<1$, $0<y<1$, $0<z<1$, and $0<y+z<1$. These positive electrode active materials may be used alone or a plurality thereof may be used in combination. Among these active materials, particularly, an active material containing Ni and/or Mn (especially when a total amount of Ni and/or Mn in the transition metal is 50 mol% or more) tends to become highly basic due to elution of raw material-derived components or metal ions, and gelation of the binder resin and deterioration of the dispersion state are caused due to this influence. Therefore, in the case of a battery containing an active material containing Ni and/or Mn, the present embodiment is particularly effective.

<Negative electrode active material>

The negative electrode active material is not particularly limited, and for example, metal oxide materials such as metallic Li that can reversibly dope or intercalate lithium ions or its alloys, tin alloys, silicon alloy negative electrodes, $LixTiO_2$, $LixFe_2O_3$, $LixFe_3O_4$, and $LixWO_2$, conductive polymers such as polyacetylene and poly-p-phenylene, artificial graphite such as highly-graphitized carbon materials, carbonaceous material powders such as natural graphite, and resin-baked carbon materials can be used. Here, x is a number and $O<x<1$. These negative electrode active materials may be used alone or a plurality thereof may be used in combination. Particularly, when a silicon alloy negative electrode is used, although the theoretical capacity is large, the volume expansion is very large. Therefore, it is preferable to use a combination of artificial graphite such as highly-graphitized carbon materials or carbonaceous material powders such as natural graphite, resin-baked carbon materials and the like.

The content of CNTs in the mixture slurry based on the mass of the active material (when the mass of the active material is 100 mass%) is preferably 0.01 mass% or more, more preferably 0.03 mass% or more, and still more preferably 0.05% or more. In addition, the content is preferably 10 mass% or less, more preferably 5 mass% or less, and still more preferably 3 mass% or less. If the content is above the above range, the amount of the active material filled into the electrode decreases, which leads to a decrease in the battery capacity. In addition, if the content is below the above range, the conductivity of the electrode and the battery may become insufficient.

The content of the dispersing agent in the mixture slurry based on the mass of the active material (when the mass of the active material is 100 mass%) is preferably 0.01 mass% or more and more preferably 0.02 mass% or more. In addition, the content is preferably 10 mass% or less and more preferably 5 mass% or less.

The content of the binder resin in the mixture slurry based on the mass of the active material (when the mass of the active material is 100 mass%) is preferably 0.1 mass% or more, and more preferably 0.3 mass% or more. In addition, the content is preferably 20 mass% or less and more preferably 10 mass% or less.

The solid content in the mixture slurry based on the mass of the mixture slurry (when the mass of the mixture slurry is 100 mass%) is preferably 30 mass% or more and more preferably 40 mass% or more. In addition, the solid content is preferably 90 mass% or less and more preferably 85 mass% or less.

As a method for producing a mixture slurry, a method of adding a binder resin to a CNT dispersion solution to produce a resin composition, additionally adding an active material to the resin composition, and performing a stirring treatment is preferable. The stirring device used for stirring is not particularly limited. A disper, a homogenizer or the like can be used as the stirring device.

In addition, the mixture slurry may further contain carbon black, and carbon black functions as a conductive

material. Carbon black is preferably contained in the mixture slurry as long as the effects of the present invention are not impaired, and the content of carbon nanotubes based on a total mass of carbon black and carbon nanotubes is preferably 1 to 80 mass% and more preferably 1 to 50 mass%. Within this range, it is possible to control the dispersion state of carbon nanotubes and maintain high dispersibility and better fluidity while containing a fluororesin. In addition, the content of carbon black based on a total mass of the mixture slurry is preferably 10 mass% or less and more preferably 5 mass% or less. Here, the method for producing a mixture slurry includes adding an active material to a resin composition for secondary battery electrodes, but the method may include additionally adding carbon black before, after, or at the same time as when the active material is added to the resin composition or a combination thereof. Alternatively, an active material may be added to a resin composition for secondary battery electrodes, which contains carbon black in advance or an active material and carbon black may be additionally added to a resin composition for secondary battery electrodes, which contains carbon black in advance.

<Electrode film>

The electrode film is obtained by forming a mixture slurry into a film, and contains CNTs, a dispersing agent, a fluororesin, and an active material. The electrode film may further contain optional components. The electrode film can be obtained by adding an active material to the above resin composition to produce a mixture slurry and applying the mixture slurry. For example, the electrode film can be formed by applying a mixture slurry onto a current collector and removing the volatile content.

The material and shape of the current collector are not particularly limited, and those suitable for various secondary batteries can be appropriately selected. Examples of materials of current collectors include metals such as aluminum, copper, nickel, titanium, and stainless steel, and alloys. In addition, regarding the shape, a foil on a flat plate is generally used, but a current collector with a roughened surface, a current collector having a perforated foil shape and a current collector having a mesh shape can be used. The thickness of the current collector is preferably about 0.5 to 30 μm.

A method of applying a mixture slurry onto a current collector is not particularly limited, and known methods can be used. Specific examples thereof include a die coating method, a dip coating method, a roll coating method, a doctor coating method, a knife coating method, a spray coating method, a gravure coating method, a screen printing method and an electrostatic coating method. Regarding the drying method after applying, standing drying, a fan dryer, a warm air dryer, an infrared heater, a far infrared heater and the like can be used, but the method is not particularly limited thereto.

After the mixture slurry is applied, rolling may be performed using a lithographic press, a calendar roll or the like. The thickness of the electrode film is, for example, 1 μm or more and 500 μm or less, and preferably 10 μm or more and 300 μm or less.

<Secondary battery>

The secondary battery includes a positive electrode, a negative electrode, and an electrolyte, and at least one selected from the group consisting of the positive electrode and the negative electrode includes the above electrode film. In the method for producing a secondary battery, for example, at least one of the positive electrode and the negative electrode is produced by applying a mixture slurry onto a current collector to form an electrode film, and the mixture slurry is produced by adding an active material to the above resin composition for secondary battery electrodes.

Regarding the positive electrode, those obtained by applying and drying a mixture slurry containing a positive electrode active material on a current collector to produce an electrode film can be used. Regarding the negative electrode, those obtained by applying and drying a mixture slurry containing a negative electrode active material on a current collector to produce an electrode film can be used. As the positive electrode active material and the negative electrode active material, those described above can be used. The mixture slurry can be produced by the above method.

The electrolyte may be any of a liquid electrolyte, a gel electrolyte, and a solid electrolyte. For example, the liquid electrolyte may include an electrolyte salt such as a lithium salt and a non-aqueous solvent.

Regarding the electrolyte salt, various conventionally known electrolyte salts in which ions can move can be used. Examples thereof include lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, and $LiBPh_4$ (where, Ph is a phenyl group), but the present invention is not limited thereto. The electrolyte salt is preferably dissolved in a non-aqueous solvent and used as an electrolytic solution.

The non-aqueous solvent is not particularly limited, and examples thereof include carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyl tetrahydrofuran, 1,3-dioxolane, 4-methyl-1,3-dioxolane, 1,2-methoxyethane, 1,2-ethoxyethane, and 1,2-dibutoxyethane;

esters such as methyl formate, methyl acetate, and methyl propionate; sulfoxides such as dimethyl sulfoxide and sulfolane; and nitriles such as acetonitrile. These solvents may be used alone or two or more thereof may be used in combination.

The secondary battery preferably includes a separator. Examples of separators include polyethylene non-woven fabrics, polypropylene non-woven fabrics, polyamide non-woven fabrics and non-woven fabrics obtained by subjecting these to a hydrophilic treatment, but the present invention is not limited thereto.

The structure of the secondary battery is not particularly limited, but is generally composed of a positive electrode and a negative electrode, and a separator provided as necessary, and various shapes such as a paper shape, a cylindrical shape, a button shape, and a laminated shape can be used according to the purpose of use.

[Examples]

The present invention will be described below in further detail with reference to examples. The present invention is not limited to the following examples as long as other examples do not depart from the gist thereof. Here, unless otherwise specified, "parts" indicates "parts by mass" and "%" indicates "mass%."

<Production of dispersing agent>

(Production Example 1 production of H-NBR1)

32 parts of acrylonitrile, 68 parts of 1,3-butadiene, 3 parts of potassium oleate soap, 0.3 parts of azobisisobutyronitrile, 0.48 parts of t-dodecyl mercaptan, and 200 parts of deionized water were put into a stainless steel polymerization reaction container. Polymerization was performed under a nitrogen atmosphere at 45°C for 20 hours with stirring, and the polymerization was completed at a conversion rate of 90%. Unreacted monomers were removed by decompression stripping to obtain an acrylonitrile-conjugated diene rubber latex having a solid content concentration of about 30%. Subsequently, deionized water was added to the latex, the total solid content concentration was adjusted to 12%, the mixture was put into an autoclave having a volume of 1 L and with a stirrer, nitrogen gas was passed therethrough for 10 minutes, and dissolved oxygen in the content was removed. A catalyst solution prepared by dissolving 75 mg of palladium acetate as a hydrogenation catalyst in 180 mL of deionized water to which nitric acid having a molar amount of 4 times that of palladium was added was added to the autoclaved. After the inside of the autoclave was purged with hydrogen gas twice, while pressurization with hydrogen gas was performed to 3 MPa, the content of the autoclave was heated to 50°C, and a hydrogenation reaction was performed for 6 hours. Then, the content was returned to room temperature, a nitrogen atmosphere was created in the autoclave, and the solid content was then dried to obtain a dispersing agent (H-NBR1). The Mooney viscosity ($ML_{1+4}$, 100°C) of H-NBR1 (measured using an L-shaped rotor at a temperature of 100°C according to Japanese Industrial Standards JIS K6300-1) was 44. In addition, the hydrogenation rate (calculated through infrared spectroscopic analysis according to a total reflection measurement method) was 0.7%. The proportion of the structural unit derived from acrylonitrile determined from the $^1$H- NMR quantitative spectrum was 32%.

(Production Example 2 production of PAN)

A dispersing agent (A-6: acrylonitrile/hydroxyethyl acrylate=90/10, a weight average molecular weight of 15,000) described in paragraph (0078) in Japanese Patent Laid-Open No. 2020-163362 was produce. Hereinafter, the obtained dispersing agent will be referred to as PAN.

<High purification treatment of carbon nanotubes>

(Production Example 3 production of 100T-P)

After 5 g of water was added to 1 g of carbon nanotubes (K-Nanos 100T: commercially available from Kumho Petrochemical), the mixture was stirred with a Henschel type mixer to obtain granular carbon nanotubes (with a particle size of about 7 mm). Granular carbon nanotubes were spread in a vat and dried in a vacuum hot air oven at 100°C for 7 hours to obtain compressed CNTs. The obtained compressed CNTs were put into a ceramic crucible and placed in a baking furnace. The inside of the furnace was vacuum-disposed until the pressure reached 1 Torr or less and the temperature was then raised to 1,000°C. After carbon tetrachloride gas was introduced at 0.3 L/min until the pressure in the furnace reached 90 Torr, the temperature inside the furnace was raised to 1,600°C and left for 1 hour. Subsequently, the heater was stopped, the pressure was then slowly reduced to 1 Torr, and cooling was performed to room temperature. The reduced pressure in the furnace was released and highly purified carbon nanotubes (100T-P) were collected from

the crucible.

<Production of single-walled CNT resin composition>

(Production Example 4 production of TUBALL-F)

97.6 parts of N-methyl-2-pyrrolidone (NMP) was put into a stainless steel container, 2.0 parts of polyvinylidene fluoride resin (solef5130, commercially available from Solvay) was added thereto while stirring with a disper, and the mixture was stirred with a disper until the polyvinylidene fluoride resin was dissolved. Then, 0.4 parts of single-walled carbon nanotubes (TUBALL: commercially available from OCSiAl, a carbon purity of 93%) were weighed out and added thereto while stirring with a disper, a square-hole high shear screen was attached to a high shear mixer (L5M-A, commercially available from Silverson Co., Ltd.), and a batch type dispersion was performed at a speed of 8,600 rpm until the entire mixture was made uniform. Subsequently, a solution to be dispersed was supplied to high pressure homogenizer (Star Burst Labo HJP-17007, commercially available from Sugino Machine Ltd.) from the stainless steel container through a pipe, and a pass-type dispersion treatment was performed five times to obtain a single-walled carbon nanotube resin composition (TUBALL-F). The dispersion treatment was performed using a single nozzle chamber with a nozzle diameter of 0.25 mm and at a pressure of 60 MPa.

In examples and comparative examples, in addition to the dispersing agents produced in Production Examples 1 and 2, the following dispersing agents were used.

·H-NBR2: Therban(R) 3406 (hydrogenated acrylonitrile-butadiene rubber, commercially available from ARLANXEO)
·H-NBR3: Therban(R) AT 3404 (hydrogenated acrylonitrile-butadiene rubber, commercially available from ARLANXEO)
·H-NBR4: Zetpole 2000L (hydrogenated acrylonitrile-butadiene rubber, commercially available from Zeon Corporation)
·PVP: polyvinylpyrrolidone K-15 (commercially available from ISP)
·PVA: Kuraray Poval 3-86SD (modified polyvinyl alcohol, commercially available from Kuraray Co., Ltd.)

In examples and comparative examples, in addition to the carbon nanotubes produced in Production Example 3, the following carbon nanotubes were used.

·100T: K-Nanos 100T (commercially available from Kumho Petrochemical, multi-walled CNTs, an average outer diameter of 13 nm, a specific surface area of 210 $m^2/g$)
·BT1001M: LUCAN BT1001M (commercially available from LG chem Ltd, multi-walled CNTs, an average outer diameter of 13 nm, a specific surface area of 250 $m^2/g$)
·10B: JENO TUBE 10B (commercially available from JEIO, multi-walled CNTs, an average outer diameter of 10 nm, a specific surface area of 230 $m^2/g$)
·8B: JENO TUBE 8B (commercially available from JEIO, multi-walled CNTs, an average outer diameter of 8 nm, a specific surface area of 300 $m^2/g$)
·6A: JENO TUBE 6A (commercially available from JEIO, multi-walled CNTs, an average outer diameter of 6 nm, a specific surface area of 700 $m^2/g$)
·TUBALL: single-walled carbon nanotubes (commercially available from OCSiAl, an average outer diameter of 1.6 nm, a carbon purity of 93%, a specific surface area of 975 $m^2/g$)

In examples and comparative examples, in addition to the carbon nanotubes, the following conductive materials were used.

·Super-P (conductive carbon black, commercially available from IMERYS Graphite & Carbon, a BET specific surface area of 62 $m^2/g$)

In examples and comparative examples, the following binders were used.

·S-5130: solef5130 (commercially available from Solvay, polyvinylidene fluoride resin)
·W#7300: KF polymer W#7300 (polyvinylidene fluoride resin, commercially available from Kureha Corporation)
·W#7200: KF polymer W#7200 (polyvinylidene fluoride resin, commercially available from Kureha Corporation)
·W#1300: KF polymer W#1300 (polyvinylidene fluoride resin, commercially available from Kureha Corporation)
·W#9300: KF polymer W#9300 (polyvinylidene fluoride resin, commercially available from Kureha Corporation)

<Production of resin composition>

(Example 1-1)

According to materials and compositions shown in Table 1, materials except the binder were sequentially added to produce a carbon nanotube dispersion solution as follows. First, NMP was put into a stainless steel container, and the temperature was raised to 50°C. After a dispersing agent and an additive were added while stirring with a disper, the mixture was stirred for 1 hour and the dispersing agent was dissolved. Subsequently, CNTs were added while stirring with a disper, a square-hole high shear screen was attached to a high shear mixer (L5M-A, commercially available from Silverson Co., Ltd.), and a batch type dispersion was performed at a speed of 8,000 rpm until the entire mixture was made uniform and the dispersed particle size measured with a grind gauge with a maximum groove depth of 300 μm was 250 μm or less. In this case, the dispersed particle size confirmed with a grind gauge was 180 μm. Subsequently, a solution to be dispersed was supplied to a high pressure homogenizer (Star Burst Labo HJP-17007, commercially available from Sugino Machine Ltd.) from the stainless steel container through a pipe and a circulation dispersion treatment was performed. The dispersion treatment was performed using a single nozzle chamber with a nozzle diameter of 0.25 mm and at a pressure of 100 MPa. After dispersion was performed until the viscosity of the solution to be dispersed measured with a type B viscometer (VISCOMETER, MODEL: BL, commercially available from TOKI SANGYO) at 60 rpm was 3,000 mPa·s or less, a pass-type dispersion treatment was performed using a high pressure homogenizer according to the number of passes shown in Table 1, and thereby a carbon nanotube dispersion solution was obtained. Subsequently, the temperature was raised to 50°C, and the entire amount of the binder was added little by little while stirring with a disper. The mixture was stirred for 2 hours, the entire amount of the binder was dissolved, and thereby a resin composition 1 was obtained.

(Examples 1-2 to 1-25)

Resin compositions 2 to 25 were obtained in the same manner as in Example 1-1 except that materials, compositions, and the number of passes were changed as shown in Table 1. In the production of the resin composition 24, when CNTs were added, 6A and TUBALL were added at the same time. In the production of the resin composition 25, when CNTs were added, 6A and TUBALL as well as other conductive material Super-P were added at the same time.

(Example 1-26)

A resin composition 26 was obtained in the same manner as in Example 1-1 except that a binder was dissolved in NMP in advance and used as an 8% solution. Here, when the carbon nanotube dispersion solution was prepared, the NMP used for dissolving the binder was prepared and the finished composition was combined.

(Example 1-27)

A carbon nanotube dispersion solution was produced in the same method as in Example 1-18 except that no binder was added. Then, 100 parts of the carbon nanotube dispersion solution was put into a stainless steel container, 80 parts of the single-walled CNT resin composition (TUBALL-F) produced in Production Example 4 was then added to 100 parts of the carbon nanotube dispersion solution, and the mixture was stirred with a disper until it became uniform, and thereby a resin composition 27 was obtained.

(Example 1-28)

According to the materials and composition shown in Table 1, a resin composition was produced as follows. NMP was put into a stainless steel container, and the temperature was raised to 50°C. After a dispersing agent and an additive were added while stirring with a disper, the mixture was stirred for 1 hour and the dispersing agent was dissolved. After tumbling the CNTs and the binder in a powder state, they were added to the dispersing agent solution while stirring with a disper, a square-hole high shear screen was attached to a high shear mixer (L5M-A, commercially available from Silverson Co., Ltd.), and a batch type dispersion was performed at a speed of 8,000 rpm until the entire mixture was made uniform and the dispersed particle size measured with a grind gauge with a maximum groove depth of 300 μm was 250 μm or less. Hereinafter, a pass-type dispersion treatment was performed using a high pressure homogenizer in the same manner as in the process of producing the carbon nanotube dispersion solution in Example 1-1, and thereby a resin composition 28 was obtained.

(Examples 1-29 to 1-31)

Resin compositions 29 to 31 were obtained in the same manner as in Example 1-28 except that dispersing agents shown in Table 1 were used.

(Example 1-32)

According to the materials and composition shown in Table 1, a resin composition was produced as follows. NMP was put into a stainless steel container, and the temperature was raised to 50°C. After a dispersing agent, an additive and a binder were added while stirring with a disper, the mixture was stirred and dissolved for 1 hour. CNTs were added to the dispersing agent solution while stirring with a disper, a square-hole high shear screen was attached to a high shear mixer (L5M-A, commercially available from Silverson Co., Ltd.), a batch type dispersion was performed at a speed of 8,000 rpm until the entire mixture was made uniform and the dispersed particle size measured with a grind gauge with a maximum groove depth of 300 μm was 250 μm or less. Hereinafter, a pass-type dispersion treatment was performed using a high pressure homogenizer in the same manner as in the process of producing the carbon nanotube dispersion solution in Example 1-1, and thereby a resin composition 32 was obtained.

(Comparative Example 1-1)

A comparative resin composition 1 was obtained in the same manner as in Example 1-1 according to materials and compositions shown in Table 1 except that the number of passes of the high pressure homogenizer was changed to 10.

(Comparative Example 1-2)

A comparative resin composition 2 was obtained in the same manner as in Example 1-13 according to materials and compositions shown in Table 1 except that the number of passes of the high pressure homogenizer was changed to 15.

(Comparative Example 1-3)

Instead of dispersion using a high pressure homogenizer in Example 1-1, dispersion was performed using a bead mill (Starmill LMZ06, commercially available from Ashizawa Finetech Ltd., a bead diameter of 1.0 mm, and a bead filling rate of 80%), and thereby a comparative resin composition 3 was obtained. Here, the number of passes was 25.

[Table 1]

| Production of resin composition | | | | | | | | | | | | | | | |
|---|---|---|---|---|---|---|---|---|---|---|---|---|---|---|---|
| Table 1 | | | | | | | | | | | | | | | |
| Example Comparativ e Example | Resin compositio n | CNT | | CNT | | Other conductive material | | Dispersing agent | | Additive | | Binder | | NMP | Numbe r of passes |
| | | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Amoun t added (parts) | (times) |
| Example 1-1 | resin compositio n 1 | BT1001 M | 3.0 | | | | | H-NBR1 | 0.6 | NaOH | 0.006 | S-5130 | 3.0 | 93.39 | 15 |
| Example 1-2 | resin compositio n2 | BT1001 M | 3.0 | | | | | H-NBR2 | 0.6 | NaOH | 0.006 | S-5130 | 3.0 | 93.39 | 15 |
| Example 1-3 | resin compositio n 3 | BT1001 M | 3.0 | | | | | H-NBR3 | 0.6 | NaOH | 0.006 | S-5130 | 3.0 | 93.39 | 15 |
| Example 1-4 | resin compositio n 4 | BT1001 M | 3.0 | | | | | H-NBR4 | 0.6 | NaOH | 0.006 | S-5130 | 3.0 | 93.39 | 15 |
| Example 1-5 | resin compositio n 5 | BT1001 M | 3.0 | | | | | H-NBR1/PV P | 0.6 | NaOH | 0.006 | S-5130 | 3.0 | 93.39 | 15 |
| Example 1-6 | resin compositio n 6 | BT1001 M | 3.0 | | | | | PVP | 0.6 | NaOH | 0.006 | S-5130 | 3.0 | 93.39 | 15 |
| Example 1-7 | resin compositio n7 | BT1001 M | 3.0 | | | | | PVA | 0.6 | NaOH | 0.006 | S-5130 | 3.0 | 93.39 | 15 |
| Example 1-8 | resin compositio n 8 | BT1001 M | 3.0 | | | | | PAN | 0.6 | NaOH | 0.006 | S-5130 | 3.0 | 93.39 | 15 |
| Example 1-9 | resin compositio n 9 | BT1001 M | 3.0 | | | | | H-NBR1/PA N | 0.6 | NaOH | 0.006 | S-5130 | 3.0 | 93.39 | 15 |
| Example 1-10 | resin compositio n 10 | BT1001 M | 3.0 | | | | | H-NBR1 | 0.6 | NaOH | 0.024 | S-5130 | 3.0 | 93.38 | 15 |

(continued)

| Production of resin composition | | | | | | | | | | | | | | | |
|---|---|---|---|---|---|---|---|---|---|---|---|---|---|---|---|
| Table 1 | | | | | | | | | | | | | | | |
| Example Comparativ e Example | Resin compositio n | CNT | | CNT | | Other conductive material | | Dispersing agent | | Additive | | Binder | | NMP | Numbe r of passes |
| | | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Amoun t added (parts) | (times) |
| Example 1-11 | resin compositio n 11 | BT1001 M | 3.0 | | | | | H-NBR1 | 0.6 | t-BuONa | 0.006 | S-5130 | 3.0 | 93.39 | 15 |
| Example 1-12 | resin compositio n 12 | BT1001 M | 3.0 | | | | | H-NBR1 | 0.6 | ethanolamin e | 0.03 | S-5130 | 3.0 | 93.37 | 15 |
| Example 1-13 | resin compositio n 13 | BT1001 M | 3.0 | | | | | H-NBR1 | 0.6 | - | - | S-5130 | 3.0 | 93.40 | 25 |
| Example 1-14 | resin compositio n 14 | 100T | 3.0 | | | | | H-NBR1 | 0.6 | NaOH | 0.006 | S-5130 | 3.0 | 93.39 | 15 |
| Example 1-15 | resin compositio n 15 | 100T-P | 3.0 | | | | | H-NBR1 | 0.6 | NaOH | 0.006 | S-5130 | 3.0 | 93.39 | 15 |
| Example 1-16 | resin compositio n 16 | 10B | 2.0 | | | | | H-NBR1 | 0.4 | NaOH | 0.004 | S-5130 | 3.0 | 94.60 | 15 |
| Example 1-17 | resin compositio n 17 | 8B | 1.6 | | | | | H-NBR1 | 0.4 | NaOH | 0.004 | S-5130 | 3.0 | 95.00 | 15 |

(continued)

Production of resin composition

Table 1

| Example Comparativ e Example | Resin compositio n | CNT | | CNT | | Other conductive material | | Dispersing agent | | Additive | | Binder | | NMP | Numbe r of passes |
|---|---|---|---|---|---|---|---|---|---|---|---|---|---|---|---|
| | | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Amoun t added (parts) | (times) |
| Example 1-18 | resin compositio n 18 | 6A | 1.6 | | | | | H-NBR1 | 0.4 | NaOH | 0.004 | S-5130 | 3.0 | 95.00 | 15 |
| Example 1-19 | resin compositio n 19 | TUBALL | 1.0 | | | | | H-NBR1 | 0.5 | NaOH | 0.005 | S-5130 | 3.0 | 95.50 | 15 |
| Example 1-20 | resin compositio n 20 | BT1001 M | 3.0 | | | | | H-NBR1 | 0.6 | NaOH | 0.006 | W#730 0 | 3.0 | 93.39 | 15 |
| Example 1-21 | resin compositio n 21 | BT1001 M | 3.0 | | | | | H-NBR1 | 0.6 | NaOH | 0.006 | W#720 0 | 3.0 | 93.39 | 15 |
| Example 1-22 | resin compositio n 22 | BT1001 M | 3.0 | | | | | H-NBR1 | 0.6 | NaOH | 0.006 | W#130 0 | 3.0 | 93.39 | 15 |
| Example 1-23 | resin compositio n 23 | BT1001 M | 3.0 | | | | | H-NBR1 | 0.6 | NaOH | 0.006 | W#930 0 | 3.0 | 93.39 | 15 |
| Example 1-24 | resin compositio n 24 | 6A | 1.25 | TUBAL L | 0.25 | | | H-NBR1 | 0.3 | NaOH | 0.003 | S-5130 | 3.0 | 95.20 | 15 |

(continued)

Production of resin composition

Table 1

| Example Comparative Example | Resin composition | CNT | | CNT | | Other conductive material | | Dispersing agent | | Additive | | Binder | | NMP | Number of passes |
|---|---|---|---|---|---|---|---|---|---|---|---|---|---|---|---|
| | | Type | Amount of solid content added (parts) | Type | Amount of solid content added (parts) | Type | Amount of solid content added (parts) | Type | Amount of solid content added (parts) | Type | Amount of solid content added (parts) | Type | Amount of solid content added (parts) | Amount added (parts) | (times) |
| Example 1-25 | resin composition 25 | 6A | 1.25 | TUBAL L | 0.25 | Super P | 0.5 | H-NBR1 | 0.4 | NaOH | 0.004 | S-5130 | 3.0 | 94.60 | 15 |
| Example 1-26 | resin composition 26 | BT1001 M | 3.0 | | | | | H-NBR1 | 0.6 | NaOH | 0.006 | S-5130 | 3.0 | 93.39 | 15 |
| Example 1-27 | resin composition 27 | 6A | 1.25 | TUBAL L | 0.25 | | | H-NBR1 | 0.3 | NaOH | 0.0025 | S-5130 | 1.3 | 97.00 | 15 |
| Example 1-28 | resin composition 28 | BT1001 M | 3.0 | | | | | H-NBR1 | 0.6 | NaOH | 0.006 | S-5130 | 3.0 | 93.39 | 15 |
| Example 1-29 | resin composition 29 | BT1001 M | 3.0 | | | | | PVP | 0.6 | NaOH | 0.006 | S-5130 | 3.0 | 93.39 | 15 |
| Example 1-30 | resin composition 30 | BT1001 M | 3.0 | | | | | PVA | 0.6 | NaOH | 0.006 | S-5130 | 3.0 | 93.39 | 15 |
| Example 1-31 | resin composition 31 | BT1001 M | 3.0 | | | | | PAN | 0.6 | NaOH | 0.006 | S-5130 | 3.0 | 93.39 | 15 |

(continued)

Production of resin composition

Table 1

| Example Comparativ e Example | Resin compositio n | CNT | | CNT | | Other conductive material | | Dispersing agent | | Additive | | Binder | | NMP | Numbe r of passes |
|---|---|---|---|---|---|---|---|---|---|---|---|---|---|---|---|
| | | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Type | Amoun t of solid content added (parts) | Amoun t added (parts) | (times) |
| Example 1-32 | resin compositio n 32 | BT1001 M | 3.0 | | | | | H-NBR1 | 0.6 | NaOH | 0.006 | S-5130 | 3.0 | 93.39 | 15 |
| Comparative Example 1-1 | comparative resin compositio n 1 | BT1001 M | 3.0 | | | | | H-NBR1 | 0.6 | NaOH | 0.006 | S-5130 | 3.0 | 93.39 | 10 |
| Comparativ e Example 1-2 | comparativ e resin compositio n2 | BT1001 M | 3.0 | | | | | H-NBR1 | 0.6 | - | - | S-5130 | 3.0 | 93.40 | 15 |
| Comparativ e Example 1-3 | comparativ e resin compositio n 3 | BT1001 M | 3.0 | | | | | H-NBR1 | 0.6 | NaOH | 0.006 | S-5130 | 3.0 | 93.39 | 25 |

Here, additives shown in Table 1 are as follows.

·NaOH: sodium hydroxide (commercially available from Tokyo Chemical Industry Co., Ltd., purity>98.0%, granular)
·Amino ethanol: 2-amino ethanol (commercially available from Tokyo Chemical Industry Co., Ltd., purity>99.0%)
·t-BuONa: sodium-t-butoxide (commercially available from Tokyo Chemical Industry Co., Ltd., purity>98.0%)

<Evaluation of resin composition>

(Method of measuring particle size)

The presence of coarse particles in the resin composition and the particle size were determined by a determination method using a grind gauge with a maximum groove depth of 100 μm according to JIS K5600-2-5.

Determination criteria for particle size

◎: less than 20 μm
O: 20 μm or more and less than 50 μm
Δ: 50 μm or more and less than 90 μm
×: 90 μm or more

(Method of measuring viscosity of resin composition)

The viscosity of the resin composition was measured using a type B viscometer ("BL," commercially available from Toki Sangyo Co., Ltd.) and measured at a rotor rotation speed of 6 rpm using a type B viscometer immediately after sufficiently stirring with a spatula at a temperature of 25°C, and then measured at 60 rpm. The viscosity measured at 60 rpm was defined as the initial viscosity. If the viscosity was lower, the dispersibility was better, and if the viscosity was higher, the dispersibility was poorer. If the obtained dispersion solution was clearly separated or precipitated, it was determined that the dispersibility was poor. In addition, the TI value was obtained from the value obtained by dividing the viscosity (mPa·s) at 60 rpm by the viscosity (mPa·s) at 6 rpm.

Determination criteria for initial viscosity

◎: less than 1,000 mPa·s
O: 1,000 mPa·s or more and less than 2,000 mPa·s
Δ: 2,000 mPa·s or more and less than 10,000 mPa·s
×: 10,000 mPa·s or more, precipitated or separated

Determination criteria for TI value

◎: less than 3.0
O: 3.0 or more and less than 5.0
Δ: 5.0 or more and less than 10.0
×: 10.0 or more, precipitated or separated

(Method of measuring gloss of resin composition)

A sample for gloss measurement was obtained by dropwise adding 1 mL of a resin composition onto a smooth glass substrate, applying it at 2 cm/sec with a No. 7 bar coater, and then baking it in a hot air oven at 140°C for 10 minutes and performing cooling. The coating area was about 10 cm×10 cm. Using a gloss meter (gloss meter microgross 60°, commercially available from BYK Gardner), three locations on the coating surface excluding the edges were randomly selected and measured once, and the average value was taken as the gloss at 60°.

Determination criteria for gloss

◎: 30 or more

O: 20 or more and less than 30

Δ: 10 or more and less than 20

×: less than 10

(Particle size measurement method for median diameter of resin composition)

The median diameter was measured using a particle size distribution measuring device (Partical LA-960 V2, commercially available from HORIBA Ltd.). Circulation/ultrasound operation conditions were circulation speed: 3, ultrasound intensity: 7, ultrasound duration: 1 minute, stirring speed: 1, and stirring mode: continuous. In addition, during air venting, an ultrasonic operation was performed at an ultrasound intensity of 7 for an ultrasound duration of 5 seconds. The refractive index of NMP was 1.470, and the refractive index of the carbon material was 1.92. The measurement was performed after a measurement sample was diluted so that the transmittance of a red laser diode was 60 to 80%, and the particle size was based on the volume.

Determination criteria for median diameter

O: 0.4 μm or more and less than 2.0 μm
Δ: 2.0 μm or more and less than 5.0 μm
×: less than 0.4 μm or 5.0 μm or more

(Measurement of complex elastic modulus and phase angle of resin composition)

The complex elastic modulus X and the phase angle Y of the resin composition were evaluated by performing dynamic viscoelastic measurement using a rheometer with a diameter of 60 mm and a 2° cone (RheoStress1 rotary rheometer, commercially available from Thermo Fisher Scientific K.K.) at 25°C, at a frequency of 1 Hz, and at a strain rate in a range of 0.01% to 5%. If the obtained complex elastic modulus was smaller, the dispersibility was better, and if the obtained complex elastic modulus was larger, the dispersibility was poorer. In addition, if the obtained phase angle was larger, the dispersibility was better, and if the obtained phase angle was smaller, the dispersibility was poorer. In addition, the product (X×Y) of the obtained complex elastic modulus X(Pa) and phase angle Y(°) was calculated.

(Calculation of average fiber length of CNTs)

A small amount of a sample obtained by dropwise adding NMP little by little to a resin composition while stirring with a disper and diluting it 50-fold was added dropwise to a substrate with a smooth surface, and dried and used as an observation sample. The obtained observation sample was observed and imaged under a scanning electron microscope. In the observation image, 300 arbitrary CNTs were selected, the fiber lengths thereof were measured, and an average value was calculated and defined as an average fiber length.

(Method of evaluating storage stability of resin composition)

For evaluation of the storage stability, the viscosity was measured after the dispersion solution was left and stored at 50°C for 7 days. For the measurement method, the same method as that for the initial viscosity was used for measurement.

Determination criteria for storage stability

◎: equal to that of an initial stage

O: the viscosity changed slightly

Δ: the viscosity increased but gelation did not occur

×: gelled

[Table 2]

| Evaluation of resin composition | | | | | | | | | | |
|---|---|---|---|---|---|---|---|---|---|---|
| Table 2 | | | | | | | | | | |
| Resin composition | Particle size | Initial viscosity | TI value | Gloss | Median diameter | Average fiber length of CNTs (μm) | Complex elastic modulus X(Pa) | Phase angle Y (°) | X×Y | Storage stability |
| resin composition 1 | ◎ | ◎ | ◎ | ◎ | O | 0.5 | 8.1 | 78.6 | 637 | O |
| resin composition 2 | ◎ | ◎ | ◎ | ◎ | O | 0.4 | 9.9 | 67.8 | 671 | O |
| resin composition 3 | ◎ | ◎ | ◎ | ◎ | O | 0.4 | 7.6 | 84.2 | 640 | O |
| resin composition 4 | ◎ | ◎ | ◎ | ◎ | O | 0.3 | 10.7 | 81.9 | 876 | O |
| resin composition 5 | ◎ | ◎ | ◎ | ◎ | O | 0.3 | 8.6 | 68.8 | 592 | O |
| resin composition 6 | O | O | O | O | O | 0.3 | 7.0 | 81.9 | 573 | O |
| resin composition 7 | O | O | O | O | O | 0.3 | 9.6 | 73.3 | 704 | O |
| resin composition 8 | O | O | O | O | O | 0.3 | 6.5 | 80.2 | 521 | O |
| resin composition 9 | ◎ | ◎ | ◎ | ◎ | O | 0.3 | 7.3 | 82.1 | 599 | O |
| resin composition 10 | ◎ | ◎ | ◎ | ◎ | O | 0.3 | 5.3 | 83.7 | 444 | O |
| resin composition 11 | ◎ | ◎ | ◎ | ◎ | O | 04 | 7.7 | 81.0 | 624 | O |

(continued)

| Evaluation of resin composition | | | | | | | | | | |
|---|---|---|---|---|---|---|---|---|---|---|
| Table 2 | | | | | | | | | | |
| Resin composition | Particle size | Initial viscosity | TI value | Gloss | Median diameter | Average fiber length of CNTs (μm) | Complex elastic modulus X(Pa) | Phase angle Y (°) | X×Y | Storage stability |
| resin composition 12 | O | O | O | O | O | 0.3 | 10.2 | 68.8 | 702 | O |
| resin composition 13 | O | O | O | O | O | 0.4 | 78.0 | 18.9 | 1,474 | O |
| resin composition 14 | ◎ | ◎ | ◎ | ◎ | O | 0.5 | 4.8 | 80.1 | 384 | O |
| resin composition 15 | ◎ | ◎ | ◎ | ◎ | O | 0.5 | 6.3 | 77.5 | 488 | O |
| resin composition 16 | ◎ | ◎ | ◎ | ◎ | O | 0.5 | 8.2 | 80.3 | 658 | O |
| resin composition 17 | ◎ | ◎ | ◎ | ◎ | O | 0.5 | 15.9 | 78.5 | 1,248 | O |
| resin composition 18 | ◎ | ◎ | ◎ | ◎ | O | 0.5 | 17.4 | 73.2 | 1,274 | O |
| resin composition 19 | ◎ | ◎ | ◎ | ◎ | O | 3.1 | 12.3 | 70.1 | 862 | O |
| resin composition 20 | ◎ | ◎ | ◎ | ◎ | O | 0.5 | 7.7 | 75.4 | 581 | O |
| resin composition 21 | ◎ | ◎ | ◎ | ◎ | O | 0.5 | 5.6 | 81.7 | 458 | O |
| resin composition 22 | ◎ | ◎ | ◎ | ◎ | O | 0.5 | 20.4 | 65.4 | 1,334 | O |
| resin composition 23 | ◎ | ◎ | ◎ | ◎ | O | 0.5 | 10.8 | 68.7 | 742 | O |
| resin composition 24 | O | O | O | ◎ | not determined | 2.5 | 104.0 | 13.3 | 1,383 | O |

(continued)

| Evaluation of resin composition | | | | | | | | | | |
|---|---|---|---|---|---|---|---|---|---|---|
| Table 2 | | | | | | | | | | |
| Resin composition | Particle size | Initial viscosity | TI value | Gloss | Median diameter | Average fiber length of CNTs (μm) | Complex elastic modulus X(Pa) | Phase angle Y (°) | X×Y | Storage stability |
| resin composition 25 | O | O | O | ◎ | not determined | 2.4 | 95.0 | 28.0 | 2,660 | O |
| resin composition 26 | ◎ | ◎ | ◎ | ◎ | O | 0.5 | 7.5 | 73.3 | 550 | O |
| resin composition 27 | O | O | O | ◎ | not determined | 2.5 | 123.1 | 11.5 | 1,416 | O |
| resin composition 28 | O | O | O | O | O | 0.4 | 223.0 | 20.9 | 4,661 | O |
| resin composition 29 | O | O | O | O | O | 0.3 | 171.0 | 28.7 | 4,908 | O |
| resin composition 30 | O | O | O | O | O | 0.3 | 103.0 | 30.5 | 3,142 | O |
| resin composition 31 | O | O | O | O | O | 0.4 | 32.0 | 56.4 | 1,805 | O |
| resin composition 32 | O | O | O | O | O | 0.4 | 150.0 | 31.7 | 4,755 | O |
| comparative resin composition 1 | × | × | × | ◎ | × | 0.4 | 1,021.0 | 31.4 | 32,059 | × |
| comparative resin composition 2 | × | × | × | ◎ | × | 0.4 | 1,688.0 | 14.7 | 24,814 | × |
| comparative resin composition 3 | ◎ | ◎ | ◎ | ◎ | ◎ | 0.1 | 0.9 | 31.0 | 28 | Δ |

<Production of positive electrode mixture slurry and positive electrode>

(Examples 2-1 to 2-37 and Comparative Examples 3-1 to 3-3)

According to combinations and composition ratios shown in Table 3, positive electrode mixture slurries and positive electrodes were produced as follows. A resin composition and a positive electrode active material were put into

a plastic container having a volume of 150 $cm^3$, and the mixture was stirred using a rotation/revolution mixer (Awatori Rentaro, ARE-310, commercially available from Thinky Corporation) at 2,000 rpm for 150 seconds to obtain a positive electrode mixture slurry. The non-volatile content of the positive electrode mixture slurry was 68.17 mass%. Here, in Example 2-36, a mixture slurry for a positive electrode 36 was produced according to the above method except that a resin composition, a positive electrode active material, and additionally a binder (S-5130: solef5130 (commercially available from Solvay)) were put into a plastic container having a volume of 150 $cm^3$ according to the composition ratio shown in the table. In addition, in Example 2-37, a mixture slurry for a positive electrode 37 was produced according to the above method except that a resin composition, a positive electrode active material, and additionally another conductive material (Super-P (conductive carbon black, commercially available from IMERYS Graphite & Carbon)) were put into a plastic container having a volume of 150 $cm^3$ according to the composition ratio shown in the table.

The positive electrode mixture slurry was applied onto an aluminum foil having a thickness of 20 μm using an applicator and then dried in an electric oven, at 120°C±5°C for 25 minutes to produce an electrode film. Then, the electrode film was rolled by a roll press (3t hydraulic roll press, commercially available from Thank-Metal Co., Ltd.) to obtain positive electrodes (positive electrodes 1 to 37 and comparative positive electrodes 1 to 3). Here, the weight per unit of the mixture layer was 20 mg/$cm^2$, and the density of the mixture layer after rolling was 3.2 g/cc.

In examples and comparative examples, the following positive electrode active materials were used.

· NMC1: CELLSEED NMC($LiNi_{0.6}Co_{0.2}Mn_{0.2}O_2$, commercially available from Nippon Chemical Industrial Co., Ltd.)
· NMC2: S800 ($LiNi_{0.8}Mn_{0.1}Co_{0.1}O_2$, commercially available from Kinwa)
·NCA: NAT-7050 ($LiNi_{0.8}Co_{0.15}Al_{0.05}O_2$, commercially available from BASF TODA Battery Materials LLC)
· LFP: HED (trademark) LFP-400 (lithium iron phosphate, commercially available from BASF)

<Evaluation of positive electrode>

(Method of evaluating conductivity of positive electrode)

The surface resistivity (Ω/□) of the mixture layer of the obtained positive electrode was measured using Loresta GP, MCP-T610 (commercially available from Mitsubishi Chemical Analytech Co., Ltd.). After the measurement, the thickness of the mixture layer was multiplied to obtain the volume resistivity (Q.cm) of the positive electrode. The thickness of the mixture layer was determined by subtracting the film thickness of the aluminum foil from the average value measured at three points in the electrode using a film thickness gauge (DIGIMICRO MH-15M, commercially available from NIKON) to obtain the volume resistivity (Q.cm) of the positive electrode.

Determination criteria for conductivity

◎: less than 10 Q.cm

O: 10 Q.cm or more and less than 20 Q.cm

Δ: 20 Q.cm or more and less than 30 Q.cm

×: 30 Q.cm or more

(Method of evaluating adhesion of positive electrode)

The obtained positive electrode was cut into two 90 mm×20 mm rectangles with the long axis in the coating direction. The peeling strength was measured using a desktop tensile tester (Strograph E3, commercially available from Toyo Seiki Co., Ltd.) and evaluated according to a 180 degree peeling test method. Specifically, a double-sided tape with a size of 100 mm×30 mm (No. 5000NS, commercially available from Nitoms Inc.) was attached on a stainless steel plate, and the side of the mixture layer of the produced positive electrode was brought into contact with the other side of the double-sided tape to obtain a test sample. Next, the test sample was fixed vertically so that the short sides of the rectangle were at the top and bottom, the end of an aluminum foil was peeled off at a certain speed (50 mm/min) while being pulled from below to above, and the average value of stress at that time was taken as the peeling strength.

Determination criteria for adhesion

◎: 0.8 N/cm or more

O: 0.5 N/cm or more and less than 0.8 N/cm

Δ: 0.3 N/cm or more and less than 0.5 N/cm

×: less than 0.3 N/cm

[Table 3]

| Example Comparative example | Positive electrode | Resin composition | Positive electrode active material | | CNT | Other conductive material | Binder | Conductivity | Adhesion |
|---|---|---|---|---|---|---|---|---|---|
| | | | Type | Solid content proportion (parts) | Solid content proportion (parts) | Solid content proportion (parts) | Solid content proportion (parts) | | |
| Example 2-1 | positive electrode 1 | resin composition 1 | NMC 1 | 96.7 | 1.5 | | 1.5 | ◎ | ◎ |
| Example 2-2 | positive electrode 2 | resin composition 2 | NMC 1 | 96.7 | 1.5 | | 1.5 | ◎ | ◎ |
| Example 2-3 | positive electrode 3 | resin composition 3 | NMC 1 | 96.7 | 1.5 | | 1.5 | ◎ | ◎ |
| Example 2-4 | positive electrode 4 | resin composition 4 | NMC 1 | 96.7 | 1.5 | | 1.5 | ◎ | ◎ |
| Example 2-5 | positive electrode 5 | resin composition 5 | NMC 1 | 96.7 | 1.5 | | 1.5 | O | O |
| Example 2-6 | positive electrode 6 | resin composition 6 | NMC 1 | 96.7 | 1.5 | | 1.5 | O | O |
| Example 2-7 | positive electrode 7 | resin composition 7 | NMC 1 | 96.7 | 1.5 | | 1.5 | O | O |
| Example 2-8 | positive electrode 8 | resin composition 8 | NMC 1 | 96.7 | 1.5 | | 1.5 | O | O |
| Example 2-9 | positive electrode 9 | resin composition 9 | NMC 1 | 96.7 | 1.5 | | 1.5 | ◎ | ◎ |

(continued)

| Example Comparative example | Positive electrode | Resin composition | Positive electrode active material | | CNT | Other conductive material | Binder | Conductivity | Adhesion |
|---|---|---|---|---|---|---|---|---|---|
| | | | Type | Solid content proportion (parts) | Solid content proportion (parts) | Solid content proportion (parts) | Solid content proportion (parts) | | |
| Example 2-10 | positive electrode 10 | resin composition 10 | NMC 1 | 96.7 | 1.5 | | 1.5 | O | O |
| Example 2-11 | positive electrode 11 | resin composition 11 | NMC 1 | 96.7 | 1.5 | | 1.5 | ◎ | O |
| Example 2-12 | positive electrode 12 | resin composition 12 | NMC 1 | 96.7 | 1.5 | | 1.5 | Δ | O |
| Example 2-13 | positive electrode 13 | resin composition 13 | NMC 1 | 96.7 | 1.5 | | 1.5 | O | O |
| Example 2-14 | positive electrode 14 | resin composition 14 | NMC 1 | 96.7 | 1.5 | | 1.5 | ◎ | O |
| Example 2-15 | positive electrode 15 | resin composition 15 | NMC 1 | 96.7 | 1.5 | | 1.5 | ◎ | O |
| Example 2-16 | positive electrode 16 | resin composition 16 | NMC 1 | 97.3 | 1.0 | | 1.5 | ◎ | ◎ |
| Example 2-17 | positive electrode 17 | resin composition 17 | NMC 1 | 97.5 | J.8 | | 1.5 | ◎ | ◎ |
| Example 2-18 | positive electrode 18 | resin composition 18 | NMC 1 | 97.5 | J.8 | | 1.5 | ◎ | ◎ |
| Example 2-19 | positive electrode 19 | resin composition 19 | NMC 1 | 97.7 | 0.5 | | 1.5 | ◎ | ◎ |
| Example 2-20 | positive electrode 20 | resin composition 20 | NMC 1 | 96.7 | 1.5 | | 1.5 | O | ◎ |
| Example 2-21 | positive electrode 21 | resin composition 21 | NMC 1 | 96.7 | 1.5 | | 1.5 | O | O |
| Example 2-22 | positive electrode 22 | resin composition 22 | NMC 1 | 96.7 | 1.5 | | 1.5 | O | ◎ |

(continued)

| Example Comparative example | Positive electrode | Resin composition | Positive electrode active material | | CNT | Other conductive material | Binder | Conductivity | Adhesion |
|---|---|---|---|---|---|---|---|---|---|
| | | | Type | Solid content proportion (parts) | Solid content proportion (parts) | Solid content proportion (parts) | Solid content proportion (parts) | | |
| Example 2-23 | positive electrode 23 | resin composition 23 | NMC 1 | 96.7 | 1.5 | | 1.5 | ◎ | ◎ |
| Example 2-24 | positive electrode 24 | resin composition 24 | NMC 1 | 97.6 | J.8 | | 1.5 | ◎ | ◎ |
| Example 2-25 | positive electrode 25 | resin composition 25 | NMC 1 | 97.5 | J.8 | 0.3 | 1.5 | ◎ | ◎ |
| Example 2-26 | positive electrode 26 | resin composition 26 | NMC, 1 | 96.7 | 1.5 | | 1.5 | ◎ | ◎ |
| Example 2-27 | positive electrode 27 | resin composition 27 | NMC 1 | 98.5 | J.8 | | 3.6 | ◎ | ◎ |
| Example 2-28 | positive electrode 28 | resin composition 28 | NMC 1 | 96.7 | 1.5 | | 1.5 | O | ◎ |
| Example 2-29 | positive electrode 29 | resin composition 29 | NMC 1 | 96.7 | 1.5 | | 1.5 | O | O |
| Example 2-30 | positive electrode 30 | resin composition 30 | NMC 1 | 96.7 | 1.5 | | 1.5 | O | O |
| Example 2-31 | positive electrode 31 | resin composition 31 | NMC 1 | 96.7 | 1.5 | | 1.5 | ◎ | O |
| Example 2-32 | positive electrode 32 | resin composition 32 | NMC 1 | 96.7 | 1.5 | | 1.5 | O | O |
| Example 2-33 | positive electrode 33 | resin composition 1 | NMC 2 | 96.7 | 1.5 | | 1.5 | ◎ | O |
| Example 2-34 | positive electrode 34 | resin composition 1 | NCA | 96.7 | 1.5 | | 1.5 | ◎ | O |
| Example 2-35 | positive electrode 35 | resin composition 1 | LFP | 96.7 | 1.5 | | 1.5 | O | O |

(continued)

| Example Comparative example | Positive electrode | Resin composition | Positive electrode active material | | CNT | Other conductive material | Binder | Conductivity | Adhesion |
|---|---|---|---|---|---|---|---|---|---|
| | | | Type | Solid content proportion (parts) | Solid content proportion (parts) | Solid content proportion (parts) | Solid content proportion (parts) | | |
| Example 2-36 | positive electrode 36 | resin composition 27 | NMC 2 | 97.6 | 0.8 | | 1.5 | O | O |
| Example 2-37 | positive electrode 37 | resin composition 27 | NMC 2 | 97.6 | 0.8 | 0.3 | 1.5 | ◎ | ◎ |
| Comparative Example 2-1 | comparative positive electrode 1 | comparative resin composition 1 | NMC 1 | 96.7 | 1.5 | | 1.5 | × | × |
| Comparative Example 2-2 | comparative positive electrode 2 | comparative resin composition 2 | NMC 1 | 96.7 | 1.5 | | 1.5 | × | × |
| Comparative Example 2-3 | comparative positive electrode 3 | comparative resin composition 3 | NMC 1 | 96.7 | 1.5 | | 1.5 | × | × |

<Production and evaluation of secondary battery>

(Production of standard negative electrode)

0.5 parts of acetylene black (denka black (registered trademark) HS-100, commercially available from Denka Co., Ltd.), 1 part of MAC500LC (carboxymethyl cellulose sodium salt, Sunrose special type MAC500L, commercially available from Nippon Graphite Industries, Co., Ltd., a non-volatile content of 100%), and 98.4 parts of water were put into a plastic container having a volume of 150 ml, and the mixture was then stirred using a rotation/revolution mixer (Awatori Rentaro, ARE-310, commercially available from Thinky Corporation) at 2,000 rpm for 30 seconds. In addition, 97 parts by mass of artificial graphite (CGB-20, commercially available from Nippon Graphite Industries, Co., Ltd.) as an active material was added and the mixture was stirred using a rotation/revolution mixer (Awatori Rentaro, ARE-310, commercially available from Thinky Corporation) at 2,000 rpm for 150 seconds. Subsequently, 3.1 parts of SBR (styrene butadiene rubber, TRD2001, a non-volatile content of 48%, commercially available from JSR Corporation) was added and the mixture was stirred using a rotation/revolution mixer (Awatori Rentaro, ARE-310, commercially available from Thinky Corporation) at 2,000 rpm for 30 seconds to obtain a standard negative electrode mixture slurry. The non-volatile content of the standard negative electrode mixture slurry was 50 mass%.

The above standard negative electrode mixture slurry was applied onto a copper foil having a thickness of 20 μm as a current collector using an applicator, and then dried in an electric oven at 80°C±5°C for 25 minutes, and the basis weight per unit area of the electrode was adjusted to 10 mg/cm$^2$. In addition, rolling was performed by a roll press (3t hydraulic roll press, commercially available from Thank-Metal Co., Ltd.) to produce a standard negative electrode in which the density of the mixture layer was 1.6 g/cm$^3$.

(Examples 3-1 to 3-37 and Comparative Examples 3-1 to 3-3) (production of secondary battery)

Positive electrodes and standard negative electrodes shown in Table 4 were cut into 50 mm×45 mm and 45

mm×40 mm, respectively, and the cut positive electrode and standard negative electrode and a separator (porous polypropylene film) inserted therebetween were inserted into an aluminum laminate bag and dried in an electric oven at 70°C for 1 hour. Then, 2 mL of an electrolytic solution (a non-aqueous electrolytic solution obtained by preparing a mixed solvent in which ethylene carbonate, dimethyl carbonate and diethyl carbonate were mixed at a volume ratio of 1:1:1, additionally adding 1 part by mass of vinylene carbonate as an additive with respect to 100 parts by mass, and then dissolving $LiPF_6$ at a concentration of 1 M) was injected into a glove box filled with argon gas, and the aluminum laminate was then sealed to produce a secondary battery.

(Method of evaluating rate characteristics of secondary battery)

The obtained secondary battery was placed in a thermostatic chamber at 25°C, and charging and discharging measurement was performed using a charging and discharging device (SM-8, commercially available from Hokuto Denko Corporation). Constant current and constant voltage charging (a cutoff current of 1 mA (0.02C)) was performed at a charge current of 10 mA (0.2C) up to an end of charge voltage of 4.3 V, and constant current discharging was then performed at a discharge current of 10 mA (0.2C) up to an end of discharge voltage of 3 V. After this operation was repeated three times, constant current and constant voltage charging (a cutoff current (1 mA 0.02C)) was performed at a charge current of 10 mA (0.2C) up to an end of charge voltage of 4.3 V, constant current discharging was performed until the discharge current reached 0.2C and 3C and the end of discharge voltage reached 3.0 V, and respective discharge capacities were determined. The rate characteristics can be expressed by the ratio of the 0.2C discharge capacity and the 3C discharge capacity and the following Formula 1.

$$\text{(Formula 1) Rate characteristics} = \text{3C discharge capacity/3rd 0.2C discharge capacity} \times 100\ (\%)$$

Determination criteria for rate characteristics

◎: 80% or more

O: 60% or more and less than 80%

△: 40% or more and less than 60%

×: less than 40%

(Method of evaluating cycle characteristics of secondary battery)

The obtained secondary battery was placed in a thermostatic chamber at 25°C, and charging and discharging measurement was performed using a charging and discharging device (SM-8, commercially available from Hokuto Denko Corporation). Constant current and constant voltage charging (a cutoff current of 2.5 mA(0.05C)) was performed at a charge current of 25 mA(0.5C) up to an end of charge voltage of 4.3 V, and constant current discharging was then performed at a discharge current of 25 mA(0.5C) up to an end of discharge voltage of 3 V. This operation was repeated 200 times. Cycle characteristics can be expressed by the ratio of the 3rd 0.5C discharge capacity to the 200th 0.5C discharge capacity at 25°C and the following Formula 2.

Cycle characteristics = 3rd 0.5C discharge capacity/200th 0.5C discharge capacity×100(%)

Determination criteria for cycle characteristics

◎: 85% or more

O: 80% or more and less than 85%

Δ: 50% or more and less than 80%

×: less than 50%

[Table 4]

| Example Comparative Example | Battery | Positive electrode | Rate characteristics | Cycle characteristics |
|---|---|---|---|---|
| Example 3-1 | battery 1 | positive electrode 1 | ◎ | ◎ |
| Example 3-2 | battery 2 | positive electrode 2 | ◎ | ◎ |
| Example 3-3 | battery 3 | positive electrode 3 | ◎ | ◎ |
| Example 3-4 | battery 4 | positive electrode 4 | ◎ | O |
| Example 3-5 | battery 5 | positive electrode 5 | O | O |
| Example 3-6 | battery 6 | positive electrode 6 | O | O |
| Example 3-7 | battery 7 | positive electrode 7 | O | O |
| Example 3-8 | battery 8 | positive electrode 8 | O | O |
| Example 3-9 | battery 9 | positive electrode 9 | ◎ | ◎ |
| Example 3-10 | battery 10 | positive electrode 10 | O | O |
| Example 3-11 | battery 11 | positive electrode 11 | ◎ | ◎ |
| Example 3-12 | battery 12 | positive electrode 12 | O | Δ |
| Example 3-13 | battery 13 | positive electrode 13 | Δ | O |
| Example 3-14 | battery 14 | positive electrode 14 | ◎ | O |
| Example 3-15 | battery 15 | positive electrode 15 | ◎ | O |
| Example 3-16 | battery 16 | positive electrode 16 | ◎ | ◎ |
| Example 3-17 | battery 17 | positive electrode 17 | ◎ | ◎ |
| Example 3-18 | battery 18 | positive electrode 18 | ◎ | ◎ |
| Example 3-19 | battery 19 | positive electrode 19 | ◎ | ◎ |
| Example 3-20 | battery 20 | positive electrode 20 | O | O |
| Example 3-21 | battery 21 | positive electrode 21 | O | O |
| Example 3-22 | battery 22 | positive electrode 22 | O | O |
| Example 3-23 | battery 23 | positive electrode 23 | ◎ | ◎ |
| Example 3-24 | battery 24 | positive electrode 24 | ◎ | ◎ |
| Example 3-25 | battery 25 | positive electrode 25 | ◎ | ◎ |
| Example 3-26 | battery 26 | positive electrode 26 | ◎ | ◎ |
| Example 3-27 | battery 27 | positive electrode 27 | ◎ | ◎ |
| Example 3-28 | battery 28 | positive electrode 28 | O | O |
| Example 3-29 | battery 29 | positive electrode 29 | O | O |
| Example 3-30 | battery 30 | positive electrode 30 | Δ | O |
| Example 3-31 | battery 31 | positive electrode 31 | O | O |
| Example 3-32 | battery 32 | positive electrode 32 | O | O |
| Example 3-33 | battery 33 | positive electrode 33 | ◎ | ◎ |
| Example 3-34 | battery 34 | positive electrode 34 | ◎ | ◎ |

(continued)

| Example Comparative Example | Battery | Positive electrode | Rate characteristics | Cycle characteristics |
|---|---|---|---|---|
| Example 3-35 | battery 35 | positive electrode 35 | O | ◎ |
| Example 3-36 | battery 36 | positive electrode 36 | O | ◎ |
| Example 3-37 | battery 37 | positive electrode 37 | ◎ | ◎ |
| Comparative Example 3-1 | comparative battery 1 | comparative positive electrode 1 | × | × |
| Comparative Example 3-2 | comparative battery 2 | comparative positive electrode 2 | × | × |
| Comparative Example 3-3 | comparative battery 3 | comparative positive electrode 3 | × | × |

While the present invention has been described above with reference to the embodiments, the present invention is not limited to the above embodiments. The configuration and details of the present invention can be modified in various ways within the scope of the invention that can be understood by those skilled in the art.

Priority is claimed on Japanese Patent Application No. 2021-116718, filed July 14, 2021, the content of which is incorporated herein by reference.

## Claims

1. A resin composition for secondary battery electrodes, which contains carbon nanotubes, a dispersing agent, a fluororesin, and a dispersion medium, but does not contain an active material, and has a product (X×Y) of a complex elastic modulus X(Pa) and a phase angle Y(°) at 25°C and 1 Hz obtained by dynamic viscoelastic measurement that is 30 or more and 5,000 or less.

2. The resin composition for secondary battery electrodes according to claim 1,
wherein the complex elastic modulus at 25°C and 1 Hz obtained by dynamic viscoelastic measurement is 0.1 Pa or more and 300 Pa or less.

3. The resin composition for secondary battery electrodes according to claim 1 or 2,
wherein the phase angle at 25°C and 1 Hz obtained by dynamic viscoelastic measurement is 3° or more and 90° or less.

4. The resin composition for secondary battery electrodes according to any one of claims 1 to 3,
wherein the content of the carbon nanotubes based on a total amount of the resin composition is 0.5 mass% or more and 15 mass% or less.

5. The resin composition for secondary battery electrodes according to any one of claims 1 to 4,
wherein a mass proportion of the dispersing agent with respect to the carbon nanotubes is 0.01 or more and 2 or less.

6. The resin composition for secondary battery electrodes according to any one of claims 1 to 5,
wherein a mass proportion of the fluororesin with respect to the carbon nanotubes is 0.1 or more and 10 or less.

7. The resin composition for secondary battery electrodes according to any one of claims 1 to 6,
wherein the carbon nanotubes include single-walled carbon nanotubes and multi-walled carbon nanotubes.

8. The resin composition for secondary battery electrodes according to any one of claims 1 to 7, further containing carbon black.

9. A method for producing a mixture slurry for secondary battery electrodes, comprising
adding an active material to the resin composition for secondary battery electrodes according to any one of claims 1 to 8.

10. The method for producing a mixture slurry for secondary battery electrodes according to claim 9, further comprising additionally adding carbon black before, after, or at the same time as an active material is added to the resin composition for secondary battery electrodes or a combination thereof.

11. A method for producing an electrode film, comprising:

producing a mixture slurry by adding an active material to the resin composition for secondary battery electrodes according to any one of claims 1 to 8, and
producing an electrode film by applying the mixture slurry.

12. A method for producing a secondary battery including a positive electrode, a negative electrode, and an electrolyte, comprising:

producing a mixture slurry by adding an active material to the resin composition for secondary battery electrodes according to any one of claims 1 to 8; and
producing at least one of the positive electrode and the negative electrode by forming an electrode film by applying the mixture slurry to a current collector.

**INTERNATIONAL SEARCH REPORT**

International application No.
**PCT/JP2022/027695**

**A. CLASSIFICATION OF SUBJECT MATTER**

***H01M 4/139***(2010.01)i; ***H01M 4/62***(2006.01)i
FI: H01M4/139; H01M4/62 Z

According to International Patent Classification (IPC) or to both national classification and IPC

**B. FIELDS SEARCHED**

Minimum documentation searched (classification system followed by classification symbols)

H01M4/139; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-534731 A (LG CHEM, LTD.) 22 November 2018 (2018-11-22) | 1-12 |
| A | JP 2021-72240 A (TOYO INK SC HOLDINGS CO., LTD.) 06 May 2021 (2021-05-06) | 1-12 |
| A | WO 2021/080006 A1 (TOYO INK SC HOLDINGS CO., LTD.) 29 April 2021 (2021-04-29) | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/027695**

| Patent document cited in search report | Publication date (day/month/year) | Patent family member(s) | Publication date (day/month/year) |
|---|---|---|---|
| JP 2018-534731 A | 22 November 2018 | US 2018/0175370 A1 | |
| | | WO 2017/099358 A1 | |
| | | EP 3355393 A1 | |
| | | KR 10-2017-0069141 A | |
| | | CN 107851800 A | |
| JP 2021-72240 A | 06 May 2021 | (Family: none) | |
| WO 2021/080006 A1 | 29 April 2021 | JP 2021-72279 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018534731 A
- WO 2018533175 A
- JP 2015133302 A
- JP 2015128012 A
- JP 2020163362 A
- WO 2008108360 A
- JP 2018192379 A
- JP 2019087304 A
- JP 6524479 B
- JP 2009026744 A
- JP 2021116718 A